# EUROPEAN PATENT APPLICATION

(11) **EP 4 797 855 A1**
(43) Date of publication of application: **26.08.2026**
(21) Application number: 24891710.6
(22) Date of filing: 07.11.2024
(51) Int. Cl.: H04W 74/04, H04W 48/18, H04W 74/00, H04W 84/12, H04W 72/0446, H04W 74/0816, H04J 3/16

(54) **METHOD BY WHICH SELECTED DAP OR UNSELECTED AP IN PROCEDURE FOR SELECTING MULTI-AP PERFORMS CHANNEL ACCESS WITH RESPECT TO NON-PRIMARY CHANNEL IN WIRELESS LAN SYSTEM, AND APPARATUS**

(30) Priority: 15.11.2023 KR 20230158405; 23.01.2024 KR 20240010419
(71) Applicant: LG Electronics Inc., Yeongdeungpo-gu Seoul 07336 (KR)
(72) Inventor: KIM, Geonhwan, Seoul 06772 (KR); CHA, Dongju, Seoul 06772 (KR); CHOI, Jinsoo, Seoul 06772 (KR); JANG, Insun, Seoul 06772 (KR); BAEK, Sunhee, Seoul 06772 (KR); YOON, Yelin, Seoul 06772 (KR)
(74) Representative: Plasseraud IP
(86) International application number: PCT/KR2024/017512
(87) International publication number: WO 2025/105764

(57) **Abstract**

A method by which a selected DAP or an unselected AP in a procedure for selecting a multi-AP performs channel access with respect to a non-primary channel in a wireless LAN system, and an apparatus are presented. Particularly, a first AP receives a selection request frame from a second AP through a primary channel, transmits a selection response frame to the second AP through the primary channel, performs channel access with respect to the first non-primary channel, and performs frame exchange with the first non-AP STA through the first non-primary channel.

## Description

### TECHNICAL FIELD

The present specification relates to a technique in which a selected DAP or a non-selected AP performs channel access on a non-primary channel in a procedure for selecting a Multi-AP in a wireless Local Area Network (LAN) system, and more particularly, to a method and apparatus for performing channel access and frame exchange on the non-primary channel before a shared TXOP starts or before an entire TXOP of the SAP ends.

### BACKGROUNDART

Next-generation Wi-Fi (e.g., IEEE 802.11be and/or later) aims to support ultra-high reliability when transmitting signals to STAs. To achieve this, various technologies are being considered to support high throughput, low latency, and extended range. For example, multiple APs can cooperate to perform TXOP sharing procedures.

### DISCLOSURE

### TECHNICAL PROBLEM

The present specification proposes a method and apparatus in which a selected DAP or a non-selected AP performs channel access on a non-primary channel in a procedure for selecting a Multi-AP in a wireless LAN system.

### TECHNICAL SOLUTION

One example of the present specification proposes a method in which a selected DAP or a non-selected AP performs channel access on a non-primary channel in a procedure for selecting a Multi-AP.

The present embodiment may be performed in a network environment supporting a next-generation wireless LAN system (Ultra High Reliability (UHR) wireless LAN system or next Wi-Fi). The next-generation wireless LAN system is a wireless LAN system that improves upon the 802.11be system and may satisfy backward compatibility with the 802.11be system.

The present embodiment is performed at a first AP, wherein the first AP may be configured as a Shared AP (DAP) after negotiation in Multi-AP communication, and the second AP may be configured as a Sharing AP (SAP) after negotiation in Multi-AP communication. The first and second non-AP STAs of the present embodiment may correspond to at least one Station (STA).

The present embodiment proposes a method of performing coordination among a plurality of APs (e.g., C-TDMA, C-SR, C-BF, C-OFDMA, or J-TX) by selecting an AP to share a TXOP or to perform coordination between the APs. In particular, the present embodiment proposes a method in which a selected DAP and a non-selected AP in a procedure for selecting a Multi-AP perform channel access on a non-primary channel even when the primary channel is busy, and perform frame exchange with a non-AP STA within a BSS.

A first Access Point (AP) receives a selection request frame from a second AP through a primary channel.

The first AP transmits a selection response frame to the second AP through the primary channel.

The first AP performs channel access on a first non-primary channel.

The first AP performs frame exchange with a first non-AP Station (STA) through the first non-primary channel.

Based on the selection request frame and the selection response frame, it is determined whether the first AP is selected as an AP to share a first Transmit Opportunity (TXOP) for coordination among a plurality of APs.

Based on whether address information of the first AP is included in a Transmitter Address (TA) field or a Receiver Address (RA) field of the selection request frame, the first non-AP STA sets a Network Allocation Vector (NAV) for the primary channel.

The first non-primary channel is a secondary 20MHz channel on which backoff may be performed while the NAV is set for the primary channel.

The first AP may receive a Multi User-Request to Send (MU-RTS) TXOP Sharing (TXS) trigger frame from the second AP. The first AP may transmit a Clear to Send (CTS) frame to the second AP.

The first TXOP may be shared based on the MU-RTS TXS trigger frame and the CTS frame.

In addition, a duration of the first TXOP may be configured based on the selection request frame. The selection request frame may include information on a TXOP duration scheduled by the second AP for the coordination among the plurality of APs and information on a timing at which the second AP expects or schedules to share the TXOP.

Based on the selection request frame and the selection response frame, based on the first AP being selected as an AP to share the first TXOP for the coordination among the plurality of APs, the second AP is a Sharing AP (SAP) that controls the coordination among the plurality of APs, and the first AP may be a Shared AP (DAP) that is allocated or shared resources from the Sharing AP (SAP).

The first non-AP STA may be a non-AP STA within a Basic Service Set (BSS) of the first AP.

The frame exchange through the first non-primary channel may be performed until the first TXOP starts. For example, the channel access and the frame exchange on the first non-primary channel may be performed only before the duration of the first TXOP starts.

The second AP may perform frame exchange with a second non-AP STA through the primary channel. The second non-AP STA may be a non-AP STA within a BSS of the second AP. The primary channel may be a primary 20MHz channel.

Based on the address information of the first AP not being included in the TA field or the RA field of the selection request frame, the NAV may be set as a basic NAV.

Based on the address information of the first AP being included in the TA field or the RA field of the selection request frame, the NAV may be set as an intra-BSS NAV.

Based on the NAV being set as the intra-BSS NAV, the selection response frame may include information on a Non-Primary Channel Access (NPCA) mode, which is information on whether to perform the channel access on the first non-primary channel.

Based on the TA field of the selection response frame being a Basic Service Set Identifier (BSSID) of the first AP or a BSS color of the selection response frame being identical to a BSS color of the first AP, the information on the NPCA mode may be decoded by the first non-AP STA.

Based on the NPCA mode being set to 0, the first AP and the first non-AP STA may not perform the channel access on the first non-primary channel.

Based on the NPCA mode being set to 1, the first AP and the first non-AP STA may perform the channel access on the first non-primary channel. In this case, the channel access on the first non-primary channel may be performed until a NAV timer of the intra-BSS NAV expires.

The first AP may perform the backoff on the first non-primary channel. Based on the backoff value for the first non-primary channel being 0, the first AP may perform channel access on a second non-primary channel. The first AP may perform the frame exchange with the first non-AP STA through an idle channel among the first and second non-primary channels. In this case, the second non-primary channel may be a secondary channel other than the first non-primary channel within a BSS operating channel of the first AP or a channel punctured to the second AP.

Based on the selection request frame and the selection response frame, based on the first AP not being selected as an AP to share the first TXOP for the coordination among the plurality of APs (for example, the first TXOP may not be shared with the first AP), the first AP may overhear the selection request frame and the MU-RTS TXS trigger frame. In this case, the frame exchange through the first non-primary channel may be performed until the entire TXOP of the second AP ends.

For example, the present embodiment proposes a method in which a selected DAP and a non-selected AP for coordination among a plurality of APs in a procedure for selecting a Multi-AP perform channel access on a non-primary channel. In this case, the selected DAP that is shared a TXOP may perform channel access on the non-primary channel and perform frame exchange until the TXOP sharing starts. The non-selected AP that is not shared the TXOP may perform channel access on the non-primary channel and perform frame exchange until the entire TXOP of the SAP ends.

### ADVANTAGEOUS EFFECTS

As in the conventional approach, the mechanism based on the primary channel has the advantage that frame exchange between APs and non-AP STAs is protected without interference, but has the disadvantage of wasting the medium in that the non-primary channel (or secondary channel) in an IDLE state cannot be used based on the primary channel being in a BUSY state. Therefore, the present embodiment has an effect that, based on the non-primary channel being IDLE even though the primary channel of the SAP is BUSY, a selected DAP and a non-selected AP for coordination among a plurality of APs perform channel access and frame exchange on the non-primary channel, thereby increasing the utilization of the medium in coordination among a plurality of APs.

### BRIEF DESCRIPTION OF THE DRAWINGS

FIG. 1 shows an example of a transmitting apparatus and/or receiving apparatus of the present specification.
FIG. 2 is a conceptual view illustrating the structure of a wireless local area network (WLAN).
FIG. 3 illustrates a general link setup process.
FIG. 4 shows an example of a multi-link (ML).
FIG. 5 shows an example of a physical protocol data unit or physical layer (PHY) protocol data unit (PPDU) transmitted/received by an STA of the present disclosure.
FIG. 6 is a diagram illustrating the layout of resource units (RUs) used for a 20 MHz PPDU.
FIG. 7 is a diagram illustrating the layout of resource units (RUs) used for 40MHz PPDU.
FIG. 8 is a diagram illustrating the layout of resource units (RUs) used for an 80MHz PPDU.
FIG. 9 shows an operation related to UL-MU.
FIG. 10 illustrates an example of channels used/supported/defined within the 2.4 GHz band.
FIG. 11 illustrates an example of channels used/supported/defined within the 5 GHz band.
FIG. 12 illustrates an example of channels used/supported/defined within the 6 GHz band.
FIG. 13 illustrates an example of a modified transmission device and/or receiving device of the present specification.
FIG. 14 illustrates operation according to a conventional STX operation.
FIG. 15 illustrates an example of Coordinated OFDMA (C-OFDMA).
FIG. 16 illustrates an example of Coordinated Beamforming (CBF).
FIG. 17 illustrates an example of AP selection.
FIG. 18 illustrates an example of JTX/JT.
FIG. 19 illustrates an example of an operation of an MU-RTS TXS trigger frame based on a value of a TXOP Sharing Mode subfield being 2.
FIG. 20 illustrates an example of a coordinated TDMA operation.
FIG. 21 illustrates an example of a case where a SCA method is applied in a C-TDMA environment.
FIG. 22 illustrates an example of CIRP contents and a CIR field format for an A-Control based selection method.
FIG. 23 illustrates an example of SCA performed by a selected DAP in a C-TDMA environment.
FIG. 24 illustrates an example of SCA performed by unselected AP(s) in a C-TDMA environment.
FIG. 25 illustrates an example of SCA performed by a selected DAP configured with an intra-BSS NAV in a C-TDMA environment.
FIG. 26 is a procedural flowchart illustrating an operation of a transmitting apparatus according to the present embodiment.
FIG. 27 is a procedural flowchart illustrating an operation of a receiving apparatus according to the present embodiment.
FIG. 28 is a flowchart illustrating a procedure of a method for performing Non-Primary Channel Access (NPCA) by selecting an AP that performs inter-AP coordination (e.g., C-SR, C-BF, C-OFDMA, etc.) from the perspective of a Sharing AP according to the present embodiment.
FIG. 29 is a flowchart illustrating a procedure of a method for performing Non-Primary Channel Access (NPCA) by selecting an AP that shares a TXOP or performs inter-AP coordination (e.g., C-SR, C-BF, C-OFDMA, etc.) from the perspective of a Shared AP according to the present embodiment.

### MODE FOR INVENTION

In the present disclosure, "A or B" may mean "only A", "only B" or "both A and B". In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, a parenthesis used in the present disclosure may mean "for example". Specifically, when indicated as "control information (UHR-signal field)", it may mean that "UHR-signal field" is proposed as an example of the "control information". In other words, the "control information" of the present disclosure is not limited to "UHR-signal field", and "UHR-signal field" may be proposed as an example of the "control information". In addition, when indicated as "control information (i.e., UHR-signal field)", it may also mean that "UHR-signal field" is proposed as an example of the "control information".

Also, "a/an" as used in this disclosure can mean "at least one" or "one or more." Also, a term ending with "(s)" can mean "at least one" or "one or more."

Also, the expressions "based on" or "on the basis of" or "according to" as used in this disclosure mean "based at least in part on," and do not mean "based sonly on."

Technical features described individually in one figure in the present disclosure may be individually implemented, or may be simultaneously implemented.

The following example of the present disclosure may be applied to various wireless communication systems. For example, the following example of the present disclosure may be applied to a wireless local area network (WLAN) system. For example, the present disclosure may be applied to the IEEE 802.11a/g/n/ac/ax/be/bn standard. In addition, an example of the present disclosure can also be applied to a next-generation wireless LAN standard that enhances the Ultra High Reliability (UHR) standard or IEEE 802.11bn. In addition, the example of the present disclosure may also be applied to a new WLAN standard enhanced from the EHT standard or the IEEE 802.11be standard. In addition, the example of the present disclosure may be applied to a mobile communication system. For example, it may be applied to a mobile communication system based on long term evolution (LTE) depending on a 3rd generation partnership project (3GPP) standard and based on evolution of the LTE. In addition, the example of the present disclosure may be applied to a communication system of a 5G NR standard based on the 3GPP standard.

Hereinafter, in order to describe a technical feature of the present disclosure, a technical feature applicable to the present disclosure will be described.

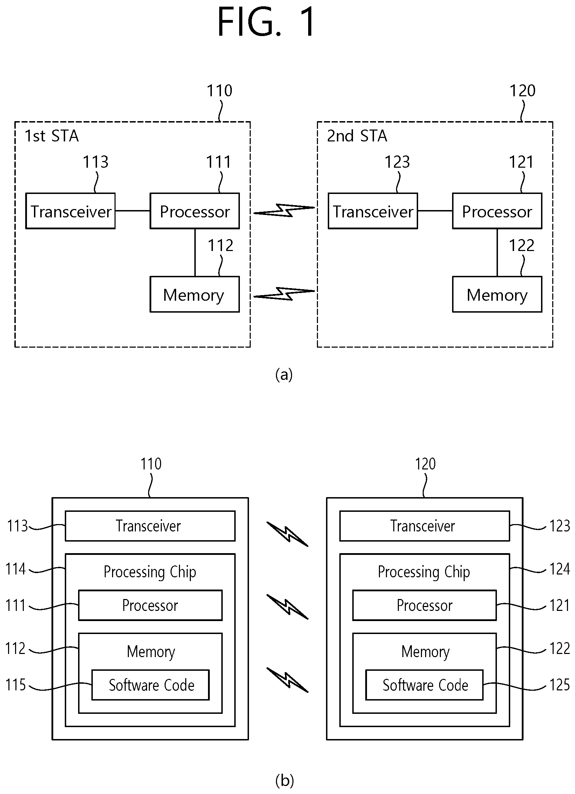

FIG. 1 shows an example of a transmitting apparatus and/or receiving apparatus of the present disclosure.

In the example of FIG. 1, various technical features described below may be performed. FIG. 1 relates to at least one station (STA). For example, STAs 110 and 120 of the present disclosure may also be called in various terms such as a mobile terminal, a wireless device, a wireless transmit/receive unit (WTRU), a user equipment (UE), a mobile station (MS), a mobile subscriber unit, or simply a user. The STAs 110 and 120 of the present disclosure may also be called in various terms such as a network, a base station, a node-B, an access point (AP), a repeater, a router, a relay, or the like. The STAs 110 and 120 of the present disclosure may also be referred to as various names such as a receiving apparatus, a transmitting apparatus, a receiving STA, a transmitting STA, a receiving device, a transmitting device, or the like.

For example, the STAs 110 and 120 may serve as an AP or a non-AP. That is, the STAs 110 and 120 of the present disclosure may serve as the AP and/or the non-AP. In the present disclosure, the AP may be indicated as an AP STA.

The STAs 110 and 120 of the present disclosure may support various communication standards together in addition to the IEEE 802.11 standard. For example, a communication standard (e.g., LTE, LTE-A, 5G NR standard) or the like based on the 3GPP standard may be supported. In addition, the STA of the present disclosure may be implemented as various devices such as a mobile phone, a vehicle, a personal computer, or the like. In addition, the STA of the present disclosure may support communication for various communication services such as voice calls, video calls, data communication, and self-driving (autonomous-driving), or the like.

The STAs 110 and 120 of the present disclosure may include a medium access control (MAC) conforming to the IEEE 802.11 standard and a physical layer interface for a radio medium.

The STAs 110 and 120 will be described below with reference to a sub-figure (a) of FIG. 1.

The first STA 110 may include a processor 111, a memory 112, and a transceiver 113. The illustrated process, memory, and transceiver may be implemented individually as separate chips, or at least two blocks/functions may be implemented through a single chip.

The transceiver 113 of the first STA performs a signal transmission/reception operation. Specifically, an IEEE 802.11 packet (e.g., IEEE 802.11a/b/g/n/ac/ax/be, etc.) may be transmitted/received.

For example, the first STA 110 may perform an operation intended by an AP. For example, the processor 111 of the AP may receive a signal through the transceiver 113, process a reception (RX) signal, generate a transmission (TX) signal, and provide control for signal transmission. The memory 112 of the AP may store a signal (e.g., RX signal) received through the transceiver 113, and may store a signal (e.g., TX signal) to be transmitted through the transceiver.

For example, the second STA 120 may perform an operation intended by a non-AP STA. For example, a transceiver 123 of a non-AP performs a signal transmission/reception operation. Specifically, an IEEE 802.11 packet (e.g., IEEE 802.11a/b/g/n/ac/ax/be packet, etc.) may be transmitted/received.

For example, a processor 121 of the non-AP STA may receive a signal through the transceiver 123, process an RX signal, generate a TX signal, and provide control for signal transmission. A memory 122 of the non-AP STA may store a signal (e.g., RX signal) received through the transceiver 123, and may store a signal (e.g., TX signal) to be transmitted through the transceiver.

For example, an operation of a device indicated as an AP in the disclosure described below may be performed in the first STA 110 or the second STA 120. For example, if the first STA 110 is the AP, the operation of the device indicated as the AP may be controlled by the processor 111 of the first STA 110, and a related signal may be transmitted or received through the transceiver 113 controlled by the processor 111 of the first STA 110. In addition, control information related to the operation of the AP or a TX/RX signal of the AP may be stored in the memory 112 of the first STA 110. In addition, if the second STA 120 is the AP, the operation of the device indicated as the AP may be controlled by the processor 121 of the second STA 120, and a related signal may be transmitted or received through the transceiver 123 controlled by the processor 121 of the second STA 120. In addition, control information related to the operation of the AP or a TX/RX signal of the AP may be stored in the memory 122 of the second STA 120.

For example, in the disclosure described below, an operation of a device indicated as a non-AP (or user-STA) may be performed in the first STA 110 or the second STA 120. For example, if the second STA 120 is the non-AP, the operation of the device indicated as the non-AP may be controlled by the processor 121 of the second STA 120, and a related signal may be transmitted or received through the transceiver 123 controlled by the processor 121 of the second STA 120. In addition, control information related to the operation of the non-AP or a TX/RX signal of the non-AP may be stored in the memory 122 of the second STA 120. For example, if the first STA 110 is the non-AP, the operation of the device indicated as the non-AP may be controlled by the processor 111 of the first STA 110, and a related signal may be transmitted or received through the transceiver 113 controlled by the processor 111 of the first STA 110. In addition, control information related to the operation of the non-AP or a TX/RX signal of the non-AP may be stored in the memory 112 of the first STA 110.

In the disclosure described below, a device called a (transmitting/receiving) STA, a first STA, a second STA, an STA1, an STA2, an AP, a first AP, a second AP, an AP1, an AP2, a (transmitting/receiving) terminal, a (transmitting/receiving) device, a (transmitting/receiving) apparatus, a network, or the like may imply the STAs 110 and 120 of FIG. 1. For example, a device indicated as, without a specific reference numeral, the (transmitting/receiving) STA, the first STA, the second STA, the STA1, the STA2, the AP, the first AP, the second AP, the AP1, the AP2, the (transmitting/receiving) terminal, the (transmitting/receiving) device, the (transmitting/receiving) apparatus, the network, or the like may imply the STAs 110 and 120 of FIG. 1. For example, in the following example, an operation in which various STAs transmit/receive a signal (e.g., a PPDU) may be performed in the transceivers 113 and 123 of FIG. 1. In addition, in the following example, an operation in which various STAs generate a TX/RX signal or perform data processing and computation in advance for the TX/RX signal may be performed in the processors 111 and 121 of FIG. 1. For example, an example of an operation for generating the TX/RX signal or performing the data processing and computation in advance may include: 1) an operation of determining/obtaining/configuring/computing/decoding/encoding bit information of a sub-field (SIG, STF, LTF, Data) included in a PPDU; 2) an operation of determining/configuring/obtaining a time resource or frequency resource (e.g., a subcarrier resource) or the like used for the sub-field (SIG, STF, LTF, Data) included the PPDU; 3) an operation of determining/configuring/obtaining a specific sequence (e.g., a pilot sequence, an STF/LTF sequence, an extra sequence applied to SIG) or the like used for the sub-field (SIG, STF, LTF, Data) field included in the PPDU; 4) a power control operation and/or power saving operation applied for the STA; and 5) an operation related to determining/obtaining/configuring/decoding/encoding or the like of an ACK signal. In addition, in the following example, a variety of information used by various STAs for determining/obtaining/configuring/computing/decoding/decoding a TX/RX signal (e.g., information related to a field/subfield/control field/parameter/power or the like) may be stored in the memories 112 and 122 of FIG. 1.

The aforementioned device/STA of the sub-figure (a) of FIG. 1 may be modified as shown in the sub-figure (b) of FIG. 1. Hereinafter, the STAs 110 and 120 of the present disclosure will be described based on the sub-figure (b) of FIG. 1.

For example, the transceivers 113 and 123 illustrated in the sub-figure (b) of FIG. 1 may perform the same function as the aforementioned transceiver illustrated in the sub-figure (a) of FIG. 1. For example, processing chips 114 and 124 illustrated in the sub-figure (b) of FIG. 1 may include the processors 111 and 121 and the memories 112 and 122. The processors 111 and 121 and memories 112 and 122 illustrated in the sub-figure (b) of FIG. 1 may perform the same function as the aforementioned processors 111 and 121 and memories 112 and 122 illustrated in the sub-figure (a) of FIG. 1.

A mobile terminal, a wireless device, a wireless transmit/receive unit (WTRU), a user equipment (UE), a mobile station (MS), a mobile subscriber unit, a user, a user STA, a network, a base station, a Node-B, an access point (AP), a repeater, a router, a relay, a receiving unit, a transmitting unit, a receiving STA, a transmitting STA, a receiving device, a transmitting device, a receiving apparatus, and/or a transmitting apparatus, which are described below, may imply the STAs 110 and 120 illustrated in the sub-figure (a)/(b) of FIG. 1, or may imply the processing chips 114 and 124 illustrated in the sub-figure (b) of FIG. 1. That is, a technical feature of the present disclosure may be performed in the STAs 110 and 120 illustrated in the sub-figure (a)/(b) of FIG. 1, or may be performed only in the processing chips 114 and 124 illustrated in the sub-figure (b) of FIG. 1. For example, a technical feature in which the transmitting STA transmits a control signal may be understood as a technical feature in which a control signal generated in the processors 111 and 121 illustrated in the sub-figure (a)/(b) of FIG. 1 is transmitted through the transceivers 113 and 123 illustrated in the sub-figure (a)/(b) of FIG. 1. Alternatively, the technical feature in which the transmitting STA transmits the control signal may be understood as a technical feature in which the control signal to be transferred to the transceivers 113 and 123 is generated in the processing chips 114 and 124 illustrated in the sub-figure (b) of FIG. 1.

For example, a technical feature in which the receiving STA receives the control signal may be understood as a technical feature in which the control signal is received by means of the transceivers 113 and 123 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (a) of FIG. 1 is obtained by the processors 111 and 121 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (b) of FIG. 1 is obtained by the processing chips 114 and 124 illustrated in the sub-figure (b) of FIG. 1.

Referring to the sub-figure (b) of FIG. 1, software codes 115 and 125 may be included in the memories 112 and 122. The software codes 115 and 126 may include instructions for controlling an operation of the processors 111 and 121. The software codes 115 and 125 may be included as various programming languages.

The processors 111 and 121 or processing chips 114 and 124 of FIG. 1 may include an application-specific integrated circuit (ASIC), other chipsets, a logic circuit and/or a data processing device. The processor may be an application processor (AP). For example, the processors 111 and 121 or processing chips 114 and 124 of FIG. 1 may include at least one of a digital signal processor (DSP), a central processing unit (CPU), a graphics processing unit (GPU), and a modulator and demodulator (modem). For example, the processors 111 and 121 or processing chips 114 and 124 of FIG. 1 may be SNAPDRAGONTM series of processors made by Qualcomm^{®}, EXYNOSTM series of processors made by Samsung^{®}, A series of processors made by Apple^{®}, HELIOTM series of processors made by MediaTek^{®}, ATOMTM series of processors made by Intel^{®} or processors enhanced from these processors.

In the present disclosure, an uplink may imply a link for communication from a non-AP STA to an AP STA, and an uplink PPDU/packet/signal or the like may be transmitted through the uplink. In addition, in the present disclosure, a downlink may imply a link for communication from the AP STA to the non-AP STA, and a downlink PPDU/packet/signal or the like may be transmitted through the downlink.

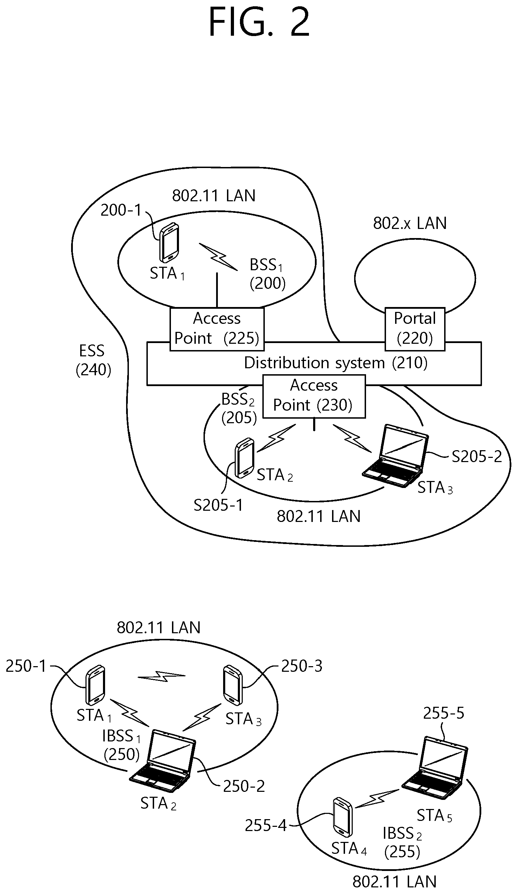

FIG. 2 is a conceptual view illustrating the structure of a wireless local area network (WLAN).

An upper part of FIG. 2 illustrates the structure of an infrastructure basic service set (BSS) of institute of electrical and electronic engineers (IEEE) 802.11.

An upper part of FIG. 2 illustrates the structure of an infrastructure basic service set (BSS) of institute of electrical and electronic engineers (IEEE) 802.11.

Referring the upper part of FIG. 2, the wireless LAN system may include one or more infrastructure BSSs 200 and 205 (hereinafter, referred to as BSS). The BSSs 200 and 205 as a set of an AP and an STA such as an access point (AP) 225 and a station (STA1) 200-1 which are successfully synchronized to communicate with each other are not concepts indicating a specific region. The BSS 205 may include one or more STAs 205-1 and 205-2 which may be joined to one AP 230.

The BSS may include at least one STA, an AP 225, 230 providing a distribution service, and a distribution system (DS) 210 connecting multiple APs.

The distribution system 210 may implement an extended service set (ESS) 240 extended by connecting the multiple BSSs 200 and 205. The ESS 240 may be used as a term indicating one network configured by connecting one or more APs 225 or 230 through the distribution system 210. The AP included in one ESS 240 may have the same service set identification (SSID).

A portal 220 may serve as a bridge which connects the wireless LAN network (IEEE 802.11) and another network (e.g., 802.X).

In the BSS illustrated in the upper part of FIG. 2, a network between the APs 225 and 230 and a network between the APs 225 and 230 and the STAs 200-1, 205-1, and 205-2 may be implemented. However, the network is configured even between the STAs without the APs 225 and 230 to perform communication. A network in which the communication is performed by configuring the network even between the STAs without the APs 225 and 230 is defined as an Ad-Hoc network or an independent basic service set (IBSS).

A lower part of FIG. 2 illustrates a conceptual view illustrating the IBSS.

Referring to the lower part of FIG. 2, the IBSS is a BSS that operates in an Ad-Hoc mode. Since the IBSS does not include the access point (AP), a centralized management entity that performs a management function at the center does not exist. That is, in the IBSS, STAs 250-1, 250-2, 250-3, 255-4, and 255-5 are managed by a distributed manner. In the IBSS, all STAs 250-1, 250-2, 250-3, 255-4, and 255-5 may be constituted by movable STAs and are not permitted to access the DS to constitute a self-contained network.

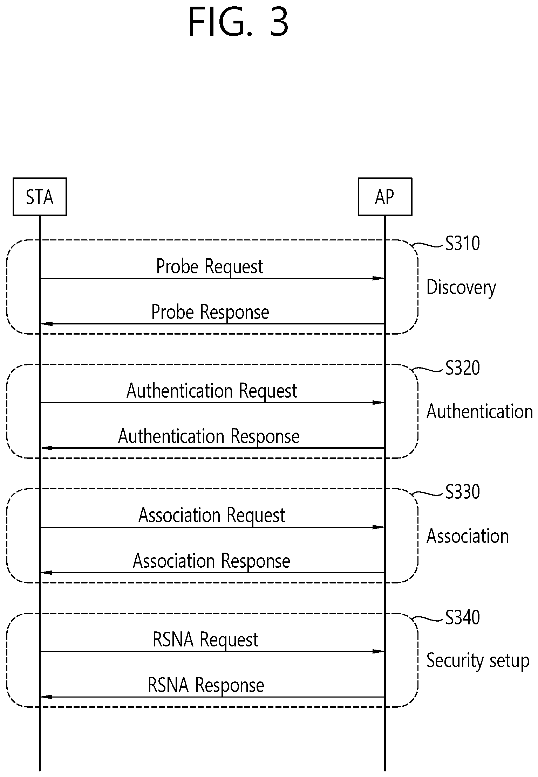

FIG. 3 illustrates a general link setup process.

In S310, a STA may perform a network discovery operation. The network discovery operation may include a scanning operation of the STA. That is, to access a network, the STA needs to discover a participating network. The STA needs to identify a compatible network before participating in a wireless network, and a process of identifying a network present in a particular area is referred to as scanning. Scanning methods include active scanning and passive scanning.

FIG. 3 illustrates a network discovery operation including an active scanning process. In active scanning, a STA performing scanning transmits a probe request frame and waits for a response to the probe request frame in order to identify which AP is present around while moving to channels. A responder transmits a probe response frame as a response to the probe request frame to the STA having transmitted the probe request frame. Here, the responder may be a STA that transmits the last beacon frame in a BSS of a channel being scanned. In the BSS, since an AP transmits a beacon frame, the AP is the responder. In an IBSS, since STAs in the IBSS transmit a beacon frame in turns, the responder is not fixed. For example, when the STA transmits a probe request frame via channel 1 and receives a probe response frame via channel 1, the STA may store BSS-related information included in the received probe response frame, may move to the next channel (e.g., channel 2), and may perform scanning (e.g., transmits a probe request and receives a probe response via channel 2) by the same method.

Although not shown in FIG. 3, scanning may be performed by a passive scanning method. In passive scanning, a STA performing scanning may wait for a beacon frame while moving to channels. A beacon frame is one of management frames in IEEE 802.11 and is periodically transmitted to indicate the presence of a wireless network and to enable the STA performing scanning to find the wireless network and to participate in the wireless network. In a BSS, an AP serves to periodically transmit a beacon frame. In an IBSS, STAs in the IBSS transmit a beacon frame in turns. Upon receiving the beacon frame, the STA performing scanning stores information about a BSS included in the beacon frame and records beacon frame information in each channel while moving to another channel. The STA having received the beacon frame may store BSS-related information included in the received beacon frame, may move to the next channel, and may perform scanning in the next channel by the same method.

After discovering the network, the STA may perform an authentication process in S320. The authentication process may be referred to as a first authentication process to be clearly distinguished from the following security setup operation in S340. The authentication process in S320 may include a process in which the STA transmits an authentication request frame to the AP and the AP transmits an authentication response frame to the STA in response. The authentication frames used for an authentication request/response are management frames.

The authentication frames may include information about an authentication algorithm number, an authentication transaction sequence number, a status code, a challenge text, a robust security network (RSN), and a finite cyclic group.

The STA may transmit the authentication request frame to the AP. The AP may determine whether to allow the authentication of the STA based on the information included in the received authentication request frame. The AP may provide the authentication processing result to the STA via the authentication response frame.

When the STA is successfully authenticated, the STA may perform an association process in S330. The association process includes a process in which the STA transmits an association request frame to the AP and the AP transmits an association response frame to the STA in response. The association request frame may include, for example, information about various capabilities, a beacon listen interval, a service set identifier (SSID), a supported rate, a supported channel, RSN, a mobility domain, a supported operating class, a traffic indication map (TIM) broadcast request, and an interworking service capability. The association response frame may include, for example, information about various capabilities, a status code, an association ID (AID), a supported rate, an enhanced distributed channel access (EDCA) parameter set, a received channel power indicator (RCPI), a received signal-to-noise indicator (RSNI), a mobility domain, a timeout interval (association comeback time), an overlapping BSS scanning parameter, a TIM broadcast response, and a QoS map.

In S340, the STA may perform a security setup process. The security setup process in S340 may include a process of setting up a private key through four-way handshaking, for example, through an extensible authentication protocol over LAN (EAPOL) frame.

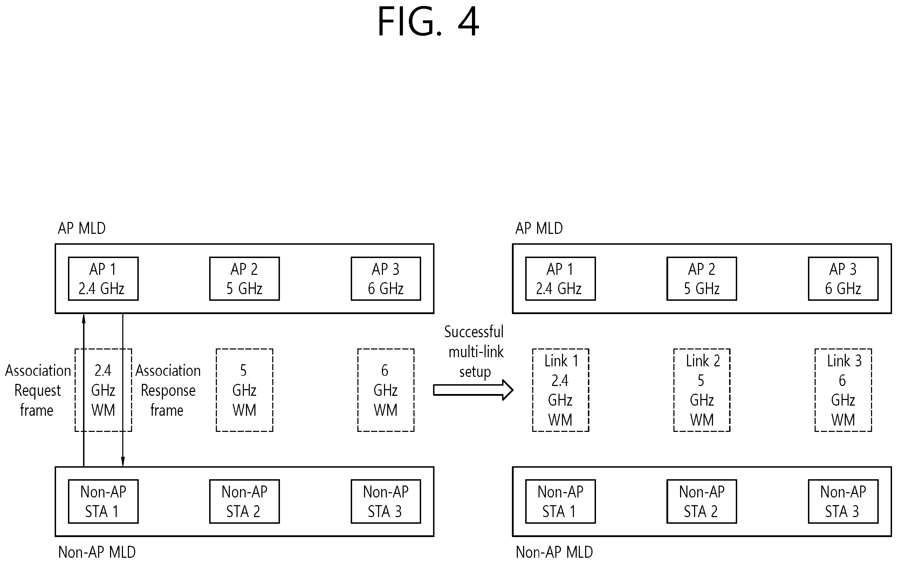

FIG. 4 shows an example of a multi-link (ML).

As illustrated in FIG. 4, multiple multi-link devices (MLDs) can perform communication via a remote link. The MLD can be classified into an AP MLD including multiple AP STAs and a non-AP MLD including multiple non-AP STAs. That is, the AP MLD can include affiliated APs (i.e., AP STAs), and the non-AP MLD can include affiliated STAs (i.e., non-AP STAs, or user-STAs).

The multi-link can include a first link and a second link, and different channels/subchannels/frequency resources can be allocated to the first and second links. The first and second multi-links can be identified through a link ID of 4 bits (or other n bits). The first and second links may be configured in the same 2.4 GHz, 5 GHz, or 6 GHz band. Alternatively, the first link and the second link may be configured in different bands.

The AP MLD of FIG. 4 includes three affiliated APs. In the example of FIG. 4, AP1 may operate in the 2.4 GHz band, AP2 may operate in the 5 GHz band, and AP3 may operate in the 6 GHz band. In the example of FIG. 4, the first link in which AP1 and non-AP1 operate may be defined as a channel/subchannel/frequency resource within the 2.4 GHz band. In addition, in the example of FIG. 4, the second link in which AP2 and non-AP2 operate may be defined as a channel/subchannel/frequency resource within the 5 GHz band. In addition, in the example of FIG. 4, the third link where AP3 and non-AP3 operate can be defined as a channel/subchannel/frequency resource within the 6 GHz band.

In the example of FIG. 4, AP1 can start a multi-link setup procedure (ML setup procedure) by transmitting an association request frame to non-AP STA1. In the example of FIG. 4, non-AP STA1 can transmit an association response frame in response to the association request frame. Each AP (e.g., AP1/2/3) illustrated in FIG. 4 may be identical to the AP illustrated in FIG. 1 and/or FIG. 2, and each non-AP (e.g., non-AP1/2/3) illustrated in FIG. 4 may be identical to the STA (i.e., user-STA or non-AP STA) illustrated in FIG. 1 and/or FIG. 2.

The specific features of the present disclosure are not limited to the specific features of FIG. 4. That is, the number of links can be defined in various ways, and multiple links can be defined in various ways within at least one band.

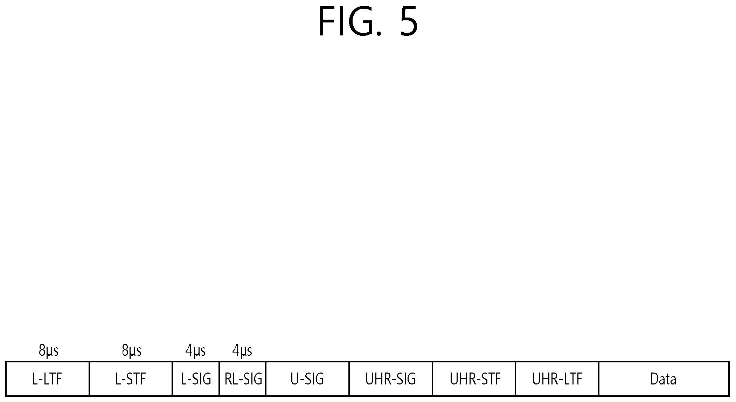

FIG. 5 shows an example of a physical protocol data unit or physical layer (PHY) protocol data unit (PPDU) transmitted/received by an STA of the present disclosure.

An STA (e.g., an AP STA, a non-AP STA, an AP MLD, a non-AP MLD) of the present disclosure can transmit and/or receive a PPDU of FIG. 5. The PPDU described in the present disclosure can have, for example, a structure of FIG. 5. In addition, the PPDU described in the present disclosure can be called by various names such as a transmission PPDU, a reception PPDU, a first type or an N^{th} type PPDU, etc. The PPDU described in the present disclosure can be used in a WLAN system defined according to IEEE 802.11bn and/or a next-generation WLAN system that improves IEEE 802.11bn.

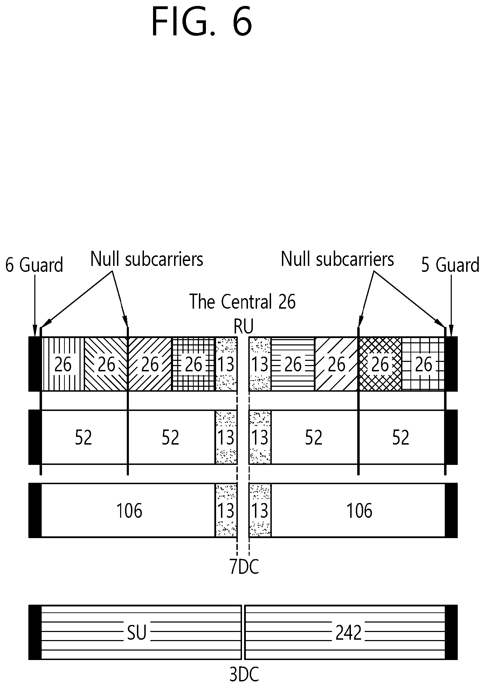

The PPDU of FIG. 5 can be related to various PPDU types used in a UHR system. For example, the example of FIG. 5 can be used for at least one of single-user (SU) mode/type/transmission, multi-user (MU) mode/type/transmission, and null-data packet (NDP) mode/type/transmission related to channel sounding. For example, if the example of FIG. 5 is related to NDP, the data field illustrated can be omitted. If the PPDU of FIG. 5 is used for trigger-based (TB) mode, UHR-SIG of FIG. 6 can be omitted. In other words, an STA that has received a trigger frame for uplink-MU (UL-MU) communication can transmit a PPDU with UHR-SIG omitted in the example of FIG. 5.

In FIG. 5, L-STF or UHR-LTF may be called a preamble or a physical preamble, and may be generated/transmitted/received/acquired/decoded in the physical layer (included in the transmitting/receiving STA).

Each block illustrated in FIG. 5 may be called a field/subfield/signal, etc. The names of these fields/subfields/signals may be legacy short training field (L-STF), legacy long training field (L-LTF), legacy signal (L-SIG), repeated L-SIG (RL-SIG), universal signal (U-SIG), UHR-signal (UHR-SIG), etc., as illustrated in FIG. 5.

A subcarrier spacing of the L-STF, L-LTF, L-SIG, RL-SIG, U-SIG, and UHR-SIG fields of FIG. 5 may be determined as 312.5 kHz, and a subcarrier spacing of the UHR-STF, UHR-LTF, and Data fields may be determined as 78.125 kHz. That is, a tone index (or subcarrier index) of the L-STF, L-LTF, L-SIG, RL-SIG, U-SIG, and UHR -SIG fields may be expressed in unit of 312.5 kHz, and a tone index (or subcarrier index) of the UHR-STF, UHR-LTF, and Data fields may be expressed in unit of 78.125 kHz.

In the PPDU of FIG. 5, the L-LTF and the L-STF may be the same as those in the conventional fields (for example, non-HT LTF and non-HT STF defined in conventional WLAN standards).

The L-SIG field of FIG. 5 may include, for example, bit information of 24 bits. For example, the 24-bit information may include a rate field of 4 bits, a reserved bit of 1 bit, a length field of 12 bits, a parity bit of 1 bit, and a tail bit of 6 bits. For example, the length field of 12 bits may include information related to a length or time duration of a PPDU. For example, the length field of 12 bits may be determined based on a type of the PPDU. For example, when the PPDU is a non-high throughput (HT), high throughput (HT), very high throughput (VHT) PPDU, extremely high throughput (EHT) PPDU or UHR PPDU, a value of the length field may be determined as a multiple of 3. For example, when the PPDU is an HE PPDU, the value of the length field may be determined as "a multiple of 3"+1 or "a multiple of 3"+2. In other words, for the non-HT, HT, VHT PPDI, EHT PPDU or the UHR PPDU, the value of the length field may be determined as a multiple of 3, and for the high efficiency (HE) PPDU, the value of the length field may be determined as "a multiple of 3"+1 or "a multiple of 3"+2. In other words, the LENGTH field in an UHR PPDU is set to a value satisfying the condition that the remainder is zero when LENGTH is divided by 3

For example, the (non-AP and AP) STA may apply BCC encoding based on a 1/2 coding rate to the 24-bit information of the L-SIG field. Thereafter, the transmitting STA may obtain a BCC coding bit of 48 bits. BPSK modulation may be applied to the 48-bit coding bit, thereby generating 48 BPSK symbols. The transmitting STA may map the 48 BPSK symbols to positions except for a pilot subcarrier{subcarrier index -21, -7, +7, +21} and a DC subcarrier{subcarrier index 0}. As a result, the 48 BPSK symbols may be mapped to subcarrier indices -26 to -22, -20 to -8, -6 to -1, +1 to +6, +8 to +20, and +22 to +26. The transmitting STA may additionally map a signal of {-1, -1, -1, 1} to a subcarrier index{-28, -27, +27, +28}. The aforementioned signal may be used for channel estimation in the frequency domain corresponding to {-28, -27, +27, +28}.

For example, the (non-AP and AP) STA may generate an RL-SIG generated in the same manner as the L-SIG. BPSK modulation may be applied to the RL-SIG. The (non-AP and AP) STA may know that the RX PPDU is the HE PPDU, EHT PPDU, or the UHR PPDU, based on the presence of the RL-SIG. In other words, a receiving (non-AP and AP) STA can know that a received PPDU is one of a HE PPDU, an EHT PPDU, and a UHR PPDU if RL-SIG is present. In other words, a receiving (non-AP and AP) STA can know that a received PPDU is one of a non-HT PPDU, an HT PPDU, and a VHT PPDU if RL-SIG is not present. In other words, the RL-SIG field is a repeat of the L-SIG field and is used to differentiate a UHR PPDU from a non-HT PPDU, HT PPDU, and VHT PPDU.

A universal SIG (U-SIG) may be inserted after the RL-SIG of FIG. 6. The U-SIG may be called in various terms such as a first SIG field, a first SIG, a first type SIG, a control signal, a control signal field, a first (type) control signal, common control field, common control signal, or the like.

The U-SIG may include information of N bits, and may include information for identifying a type of the EHT PPDU. For example, the U-SIG may be configured based on two symbols (e.g., two contiguous OFDM symbols). Each symbol (e.g., OFDM symbol) for the U-SIG may have a duration of 4us. Each symbol of the U-SIG may be used to transmit the 26-bit information. For example, each symbol of the U-SIG may be transmitted/received based on 52 data tomes and 4 pilot tones.

Through the U-SIG for example, A-bit information (e.g., 52 un-coded bits) may be transmitted. A first symbol of the U-SIG may transmit first X-bit information (e.g., 26 un-coded bits) of the A-bit information, and a second symbol of the U-SIG may transmit the remaining Y-bit information (e.g. 26 un-coded bits) of the A-bit information. For example, the transmitting STA may obtain 26 un-coded bits included in each U-SIG symbol. The transmitting STA may perform convolutional encoding (i.e., BCC encoding) based on a rate of R=1/2 to generate 52-coded bits, and may perform interleaving on the 52-coded bits. The transmitting STA may perform BPSK modulation on the interleaved 52-coded bits to generate 52 BPSK symbols to be allocated to each U-SIG symbol. One U-SIG symbol may be transmitted based on 65 tones (subcarriers) from a subcarrier index -28 to a subcarrier index +28, except for a DC index 0. The 52 BPSK symbols generated by the transmitting STA may be transmitted based on the remaining tones (subcarriers) except for pilot tones, i.e., tones -21, -7, +7, +21.

For example, the A-bit information (e.g., 52 un-coded bits) generated by the U-SIG may include a CRC field (e.g., a field having a length of 4 bits) and a tail field (e.g., a field having a length of 6 bits). The CRC field and the tail field may be transmitted through the second symbol of the U-SIG. The CRC field may be generated based on 26 bits allocated to the first symbol of the U-SIG and the remaining 16 bits except for the CRC/tail fields in the second symbol, and may be generated based on the conventional CRC calculation algorithm. In addition, the tail field may be used to terminate trellis of a convolutional decoder, and may be set to, for example, '000000'.

The A-bit information (e.g., 52 un-coded bits) transmitted by the U-SIG (or U-SIG field) may be divided into version-independent bits and version-dependent bits. For example, the version-independent bits may have a fixed or variable size. For example, the version-independent bits may be allocated only to the first symbol of the U-SIG, or the version-independent bits may be allocated to both of the first and second symbols of the U-SIG. For example, the version-independent bits and the version-dependent bits may be called in various terms such as a first control bit, a second control bit, or the like.

For example, the version-independent bits of the U-SIG may include a PHY version identifier of 3 bits. For example, the PHY version identifier of 3 bits may include information related to a PHY version of a TX/RX PPDU. For example, a first value of the PHY version identifier of 3 bits (for example, 000 value) may indicate that the TX/RX PPDU is an EHT PPDU. Also, a second value of the PHY version identifier of 3 bits (for example, 001 value) may indicate that the TX/RX PPDU is a UHR PPDU.

In other words, when the (AP/non-AP) STA transmits an EHT PPDU, the 3-bit PHY version identifier can be set to the first value, and when the (AP/non-AP) STA transmits a UHR PPDU, the 3-bit PHY version identifier can be set to the second value. In other words, the receiving (AP/non-AP) STA can determine that the received PPDU is an EHT PPDU based on the PHY version identifier having the first value, and can determine that the received PPDU is a UHR PPDU based on the PHY version identifier having the second value.

For example, the version-independent bits of the U-SIG may include a UL/DL flag field of 1 bit. A first value of the UL/DL flag field of 1 bit relates to UL communication, and a second value of the UL/DL flag field relates to DL communication.

For example, the version-independent bits of the U-SIG may include information related to a transmission opportunity (TXOP) length and information related to a BSS color ID.

For example, if a UHR PPDU is classified into various types (e.g., type related to SU transmission (performed based on UL or DL), type related to DL transmission, type related to NDP transmission, type related to DL non-MU-MIMO, type related to DL MU-MIMO, type related to multi-AP operation, type related to coordinated beamforming (Co-BF), spatial reuse (SR), type related to coordinated OFDMA (C-OFDMA), type related to coordinated TDMA (Co-TDMA)), information about the type of the UHR PPDU (e.g., 2-bit or 3-bit information) can be included in the version-dependent bits of the U-SIG.

For example, the U-SIG may include: 1) a bandwidth field including information related to a bandwidth; 2) a field including information related to an modulation and coding scheme (MCS) applied to UHR-SIG; 3) an indication field including information regarding whether a dual subcarrier modulation (DCM) scheme is applied to UHR-SIG; 4) a field including information related to the number of symbol used for UHR-SIG; 5) a field including information regarding whether the UHR-SIG is generated across a full band; 6) a field including information related to a type of UHR-LTF/STF; and 7) information related to a field indicating an UHR-LTF length and a CP length.

Preamble puncturing may be applied to the PPDU of FIG. 5. The preamble puncturing implies that puncturing is applied to part (e.g., a secondary 20 MHz band) of the full band. For example, when an 80 MHz PPDU is transmitted, an STA may apply puncturing to the secondary 20 MHz band out of the 80 MHz band, and may transmit a PPDU only through a primary 20 MHz band and a secondary 40 MHz band.

For example, a pattern of the preamble puncturing may be configured in advance. For example, when a first puncturing pattern is applied, puncturing may be applied only to the secondary 20 MHz band within the 80 MHz band. For example, when a second puncturing pattern is applied, puncturing may be applied to only any one of two secondary 20 MHz bands included in the secondary 40 MHz band within the 80 MHz band. For example, when a third puncturing pattern is applied, puncturing may be applied to only the secondary 20 MHz band included in the primary 80 MHz band within the 160 MHz band (or 80+80 MHz band). For example, when a fourth puncturing is applied, puncturing may be applied to at least one 20 MHz channel not belonging to a primary 40 MHz band in the presence of the primary 40 MHz band included in the 80MHaz band within the 160 MHz band (or 80+80 MHz band).

Information related to the preamble puncturing applied to the PPDU may be included in U-SIG and/or UHR-SIG. For example, a first field of the U-SIG may include information related to a contiguous bandwidth, and second field of the U-SIG may include information related to the preamble puncturing applied to the PPDU.

For example, the U-SIG and the UHR-SIG may include the information related to the preamble puncturing, based on the following method. When a bandwidth of the PPDU exceeds 80 MHz, the U-SIG may be configured individually in unit of 80 MHz. For example, when the bandwidth of the PPDU is 160 MHz, the PPDU may include a first U-SIG for a first 80 MHz band and a second U-SIG for a second 80 MHz band. In this case, a first field of the first U-SIG may include information related to a 160 MHz bandwidth, and a second field of the first U-SIG may include information related to a preamble puncturing (i.e., information related to a preamble puncturing pattern) applied to the first 80 MHz band. In addition, a first field of the second U-SIG may include information related to a 160 MHz bandwidth, and a second field of the second U-SIG may include information related to a preamble puncturing (i.e., information related to a preamble puncturing pattern) applied to the second 80 MHz band. Meanwhile, an UHR-SIG contiguous to the first U-SIG may include information related to a preamble puncturing applied to the second 80 MHz band (i.e., information related to a preamble puncturing pattern), and an UHR-SIG contiguous to the second U-SIG may include information related to a preamble puncturing (i.e., information related to a preamble puncturing pattern) applied to the first 80 MHz band.

Additionally or alternatively, the U-SIG and the UHR-SIG may include the information related to the preamble puncturing, based on the following method. The U-SIG may include information related to a preamble puncturing (i.e., information related to a preamble puncturing pattern) for all bands. That is, the UHR-SIG may not include the information related to the preamble puncturing, and only the U-SIG may include the information related to the preamble puncturing (i.e., the information related to the preamble puncturing pattern).

The U-SIG may be configured in unit of 20 MHz. For example, when an 80 MHz PPDU is configured, the U-SIG may be duplicated. That is, four identical U-SIGs may be included in the 80 MHz PPDU. PPDUs exceeding an 80 MHz bandwidth may include different U-SIGs.

The UHR-SIG of FIG. 5 may include control information for the receiving STA. The UHR-SIG may be transmitted through at least one symbol, and one symbol may have a length of 4us. Information related to the number of symbols used for the UHR-SIG may be included in the U-SIG.

UHR-SIG provides an additional signal to the U-SIG field to enable STA to interpret/decode UHR PPDU. UHR-SIG field may include U-SIG overflow bits that are commonly applied to all users. In addition, UHR-SIG field includes resource allocation information, so that STA can look-up resources used in fields including data field/UHR-STF/UHR-LTF (i.e., UHR modulated fields of a UHR PPDU).

Frequency resources of UHR-LTF, UHR-STF, and data fields illustrated in FIG. 5 may be determined based on RUs (resource units) defined by multiple subcarriers/tones. That is, UHR-LTF, UHR-STF, and data fields of the present disclosure may be transmitted/received through RUs (resource units) defined by multiple subcarriers/tones.

FIG. 6 is a diagram illustrating the layout of resource units (RUs) used for a 20 MHz PPDU. That is, the UHR-LTF, UHR-STF, and/or data fields included in the 20 MHz PPDU may be transmitted/received through at least one of the various RUs defined in FIG. 6.

As illustrated in the uppermost part of FIG. 6, a 26-unit (i.e., a unit corresponding to 26 tones) may be disposed. Six tones may be used for a guard band in the leftmost band of the 20 MHz band, and five tones may be used for a guard band in the rightmost band of the 20 MHz band. Further, seven DC tones may be inserted in a center band, that is, a DC band, and a 26-unit corresponding to 13 tones on each of the left and right sides of the DC band may be disposed. A 26-unit, a 52-unit, and a 106-unit may be allocated to other bands. Each unit may be allocated for a receiving STA, that is, a user.

Meanwhile, the layout of the RUs in FIG. 6 may be used not only for a multiple users (MUs) but also for a single user (SU), in which case one 242-unit may be used and three DC tones may be inserted as illustrated in the lowermost part of FIG. 6.

Although FIG. 6 proposes RUs having various sizes, that is, a 26-RU, a 52-RU, a 106-RU, and a 242-RU, specific sizes of RUs may be extended or increased. Therefore, the present embodiment is not limited to the specific size of each RU (i.e., the number of corresponding tones). In this specification, N-RU may be represented as N-tone RU, etc. For example, 26-RU may be represented as 26-tone RU.

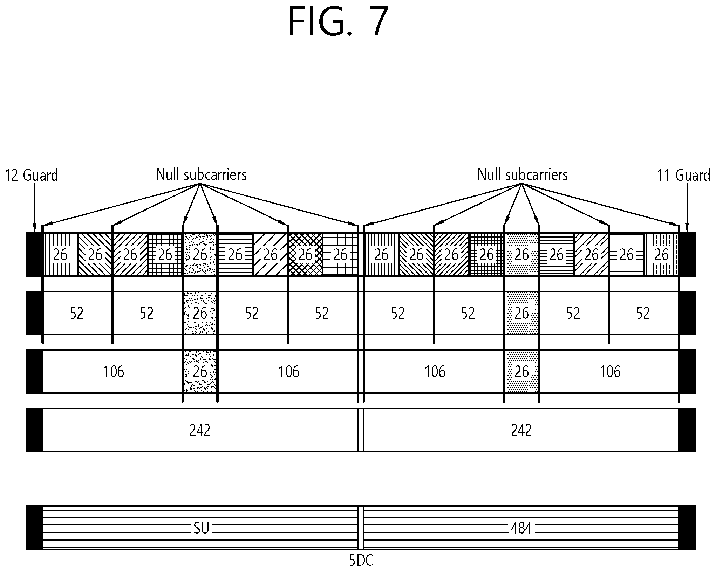

FIG. 7 is a diagram illustrating the layout of resource units (RUs) used for 40MHz PPDU.

Similarly to FIG. 6 in which RUs having various sizes are used, a 26-RU, a 52-RU, a 106-RU, a 242-RU, a 484-RU, and the like may be used in an example of FIG. 7. Further, five DC tones may be inserted in a center frequency, 12 tones may be used for a guard band in the leftmost band of the 40 MHz band, and 11 tones may be used for a guard band in the rightmost band of the 40 MHz band.

As illustrated in FIG. 7, when the layout of the RUs is used for a single user, a 484-RU may be used. The specific number of RUs may be changed similarly to FIG. 6.

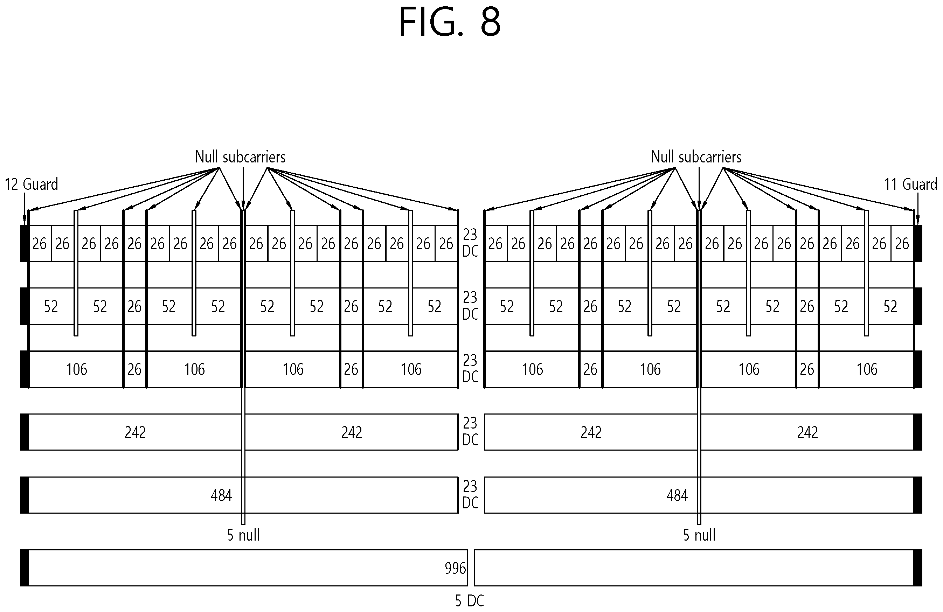

FIG. 8 is a diagram illustrating the layout of resource units (RUs) used for an 80MHz PPDU. The layout of resource units (RUs) used in this specification may vary. For example, the layout of resource units (RUs) used in the 80MHz band may vary.

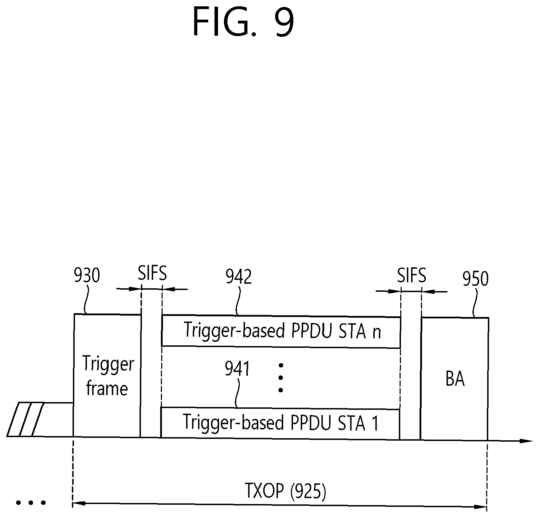

FIG. 9 shows an operation related to UL-MU. As illustrated, a transmitting STA (e.g., AP) can perform channel access through contending (i.e., backoff operation) and transmit a trigger frame (930). That is, the transmitting STA (e.g., AP) can transmit a PPDU including a trigger frame (930). When a PPDU including a trigger frame is received, a TB (trigger-based) PPDU is transmitted after a delay of SIFS.

TB PPDUs (941, 942) are transmitted at the same time and can be transmitted from multiple STAs (e.g., User STAs) whose AIDs are indicated in the Trigger frame (930). The ACK frame (950) for the TB PPDU can be implemented in various forms.

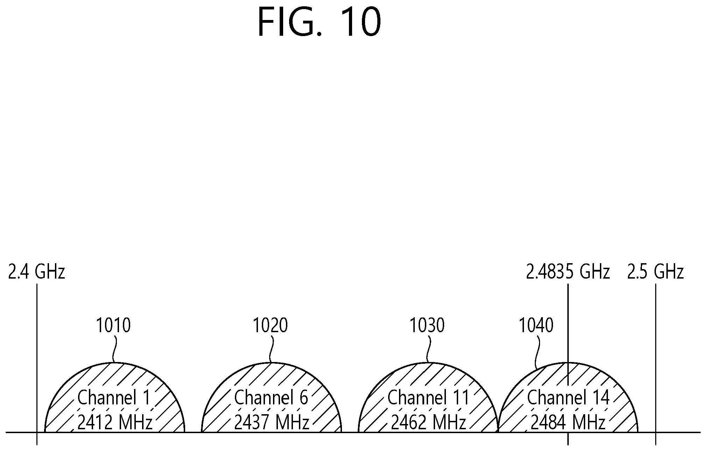

FIG. 10 illustrates an example of channels used/supported/defined within the 2.4 GHz band.

The 2.4 GHz band may also be referred to by other names, such as "first band." Furthermore, the 2.4 GHz band may refer to a frequency range in which channels with center frequencies adjacent to 2.4 GHz (e.g., channels with center frequencies between 2.4 and 2.5 GHz) are used/supported/defined.

The 2.4 GHz band may include multiple 20 MHz channels. The 20 MHz within the 2.4 GHz band may have multiple channel indices (e.g., indices 1 through 14). For example, the center frequency of a 20 MHz channel assigned channel index 1 may be 2.412 GHz, the center frequency of a 20 MHz channel assigned channel index 2 may be 2.417 GHz, and the center frequency of a 20 MHz channel assigned channel index N may be (2.407 + 0.005*N) GHz. The channel indices may be referred to by various names, such as channel numbers. The specific numerical values of the channel indices and center frequencies may change.

FIG. 10 exemplarily illustrates four channels within the 2.4 GHz band. The illustrated first frequency region (1010) to fourth frequency region (1040) may each include one channel. For example, the first frequency region (1010) may include channel 1 (a 20 MHz channel having an index of 1). In this case, the center frequency of channel 1 may be set to 2412 MHz. The second frequency region (1020) may include channel 6. In this case, the center frequency of channel 6 may be set to 2437 MHz. The third frequency region (1030) may include channel 11. In this case, the center frequency of channel 11 may be set to 2462 MHz. The fourth frequency region (1040) may include channel 14. In this case, the center frequency of channel 14 may be set to 2484 MHz.

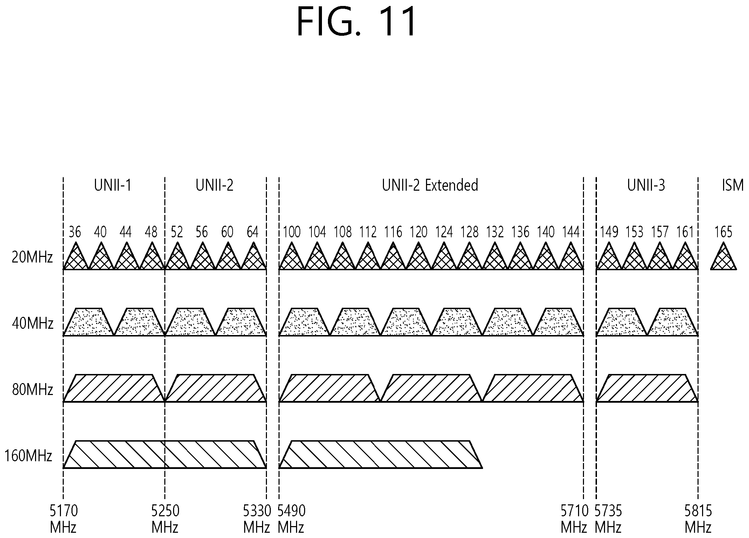

FIG. 11 illustrates an example of channels used/supported/defined within the 5 GHz band.

The 5 GHz band may be referred to by other names, such as a second band/band, etc. The 5 GHz band may refer to a frequency range in which channels with center frequencies greater than or equal to 5 GHz and less than 6 GHz (or less than 5.9 GHz) are used/supported/defined. Alternatively, the 5 GHz band may include multiple channels between 4.5 GHz and 5.5 GHz. The specific figures shown in FIG. 11 are subject to change.

Multiple channels within the 5 GHz band include Unlicensed National Information Infrastructure (UNII)-1, UNII-2, UNII-3, and ISM. UNII-1 may be referred to as UNII Low. UNII-2 may include frequency ranges called UNII Mid and UNII-2Extended. UNII-3 may be referred to as UNII-Upper.

Within the 5 GHz band, multiple channels can be configured, and the bandwidth of each channel can be variously configured, such as 20 MHz, 40 MHz, 80 MHz, or 160 MHz. For example, the 5170 MHz to 5330 MHz frequency domain/range within UNII-1 and UNII-2 can be divided into eight 20 MHz channels. The 5170 MHz to 5330 MHz frequency domain/range can be divided into four channels through a 40 MHz frequency domain. The 5170 MHz to 5330 MHz frequency domain/range can be divided into two channels through an 80 MHz frequency domain. Alternatively, the 5170 MHz to 5330 MHz frequency domain/range can be divided into one channel through a 160 MHz frequency domain.

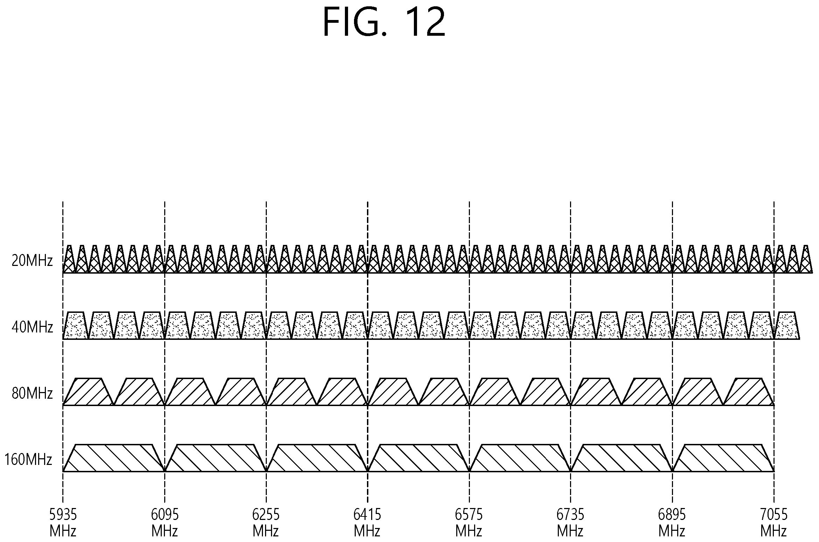

FIG. 12 illustrates an example of channels used/supported/defined within the 6 GHz band.

The 6 GHz band may be referred to by other names, such as the third band/band. The 6 GHz band may refer to a frequency range where channels with center frequencies higher than 5.9 GHz are used, supported, and defined. The specific values shown in FIG. 12 are subject to change.

For example, the 20 MHz channel in FIG. 12 may be defined starting from 5.940 GHz. Specifically, the leftmost channel among the 20 MHz channels in FIG. 12 may have an index of 1 (or channel index, channel number, etc.) and be assigned a center frequency of 5.945 GHz. In other words, the center frequency of channel index N may be determined as (5.940 + 0.005*N) GHz.

Accordingly, the indexes (or channel numbers) of the 20 MHz channels of FIG. 12 may be 1, 5, 9, 13, 17, 21, 25, 29, 33, 37, 41, 45, 49, 53, 57, 61, 65, 69, 73, 77, 81, 85, 89, 93, 97, 101, 105, 109, 113, 117, 121, 125, 129, 133, 137, 141, 145, 149, 153, 157, 161, 165, 169, 173, 177, 181, 185, 189, 193, 197, 201, 205, 209, 213, 217, 221, 225, 229, 233. Also, according to the (5.940 + 0.005*N) GHz rule mentioned above, the indexes of the 40 MHz channels in FIG. 12 may be 3, 11, 19, 27, 35, 43, 51, 59, 67, 75, 83, 91, 99, 107, 115, 123, 131, 139, 147, 155, 163, 171, 179, 187, 195, 203, 211, 219, 227.

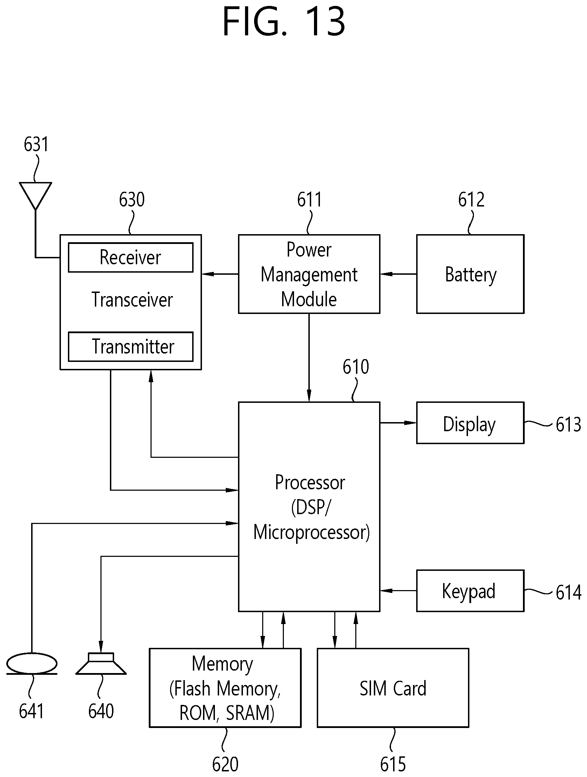

FIG. 13 shows a modified example of a transmitting device and/or a receiving device of the present disclosure.

The devices (e.g., AP STA, non-AP STA) shown in FIGS. 1 to 4 can be modified as shown in FIG. 13. The transceiver 630 of FIG. 13 can be identical to the transceiver 113, 123 of FIG. 1. The transceiver 630 of FIG. 13 can include a receiver and a transmitter.

The processor 610 of FIG. 13 can be identical to the processor 111, 121 of FIG. 1. Alternatively, the processor 610 of FIG. 13 can be identical to the processing chip 114, 124 of FIG. 1.

The memory 150 of FIG. 13 may be the same as the memory 112, 122 of FIG. 1. Alternatively, the memory 150 of FIG. 13 may be a separate external memory different from the memory 112, 122 of FIG. 1.

Referring to FIG. 13, the power management module 611 manages power for the processor 610 and/or the transceiver 630. The battery 612 supplies power to the power management module 611. The display 613 outputs the result processed by the processor 610. The keypad 614 receives input to be used by the processor 610. The keypad 614 may be displayed on the display 613. The SIM card 615 may be an integrated circuit used to securely store an international mobile subscriber identity (IMSI) and its associated keys, which are used to identify and authenticate subscribers in mobile devices such as mobile phones and computers.

Referring to FIG. 13, the speaker (640) may output sound-related results processed by the processor 610. The microphone (641) may receive sound-related input to be used by the processor 610.

Below, the Multi-AP operation applied to this specification is described.

The Multi-AP operation refers to a communication technique involving multiple APs in a WLAN. For example, the Multi-AP operation may refer to an operation in which one or more APs transmit and receive information to one or more STAs. In contrast to the Multi-AP operation, existing techniques may be expressed using various terms, such as STX (Single Transmission). For example, the STX operation may refer to a method in which one BSS AP communicates with one BSS STA. When communication is performed based on the STX operation, interference with adjacent APs (e.g., APs located in an overlapping BSS) may occur. This interference may result in reduced transmission and reception performance for cell-edge users (e.g., non-AP STAs located at the edge of the BSS).

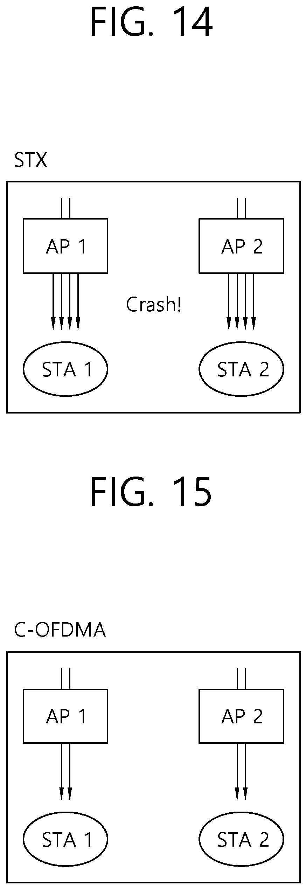

FIG. 14 illustrates operation according to a conventional STX operation. As shown, adjacent AP1 and AP2 can cause interference between STAs and APs.

To improve the STX operation, a new multi-AP operation is proposed. This multi-AP operation can be based on a technology that reduces various interferences, such as inter-symbol interference (ISI), through coordination with neighboring APs (e.g., APs located in an overlapping BSS).

In FIG. 14, STA1 and AP1 may be included in a BSS, and STA2 and AP2 may be included in an OBSS (Overlapping Basic Service Set). That is, STA2 may be an unassociated STA to AP1, and STA1 may be an unassociated STA to AP2.

For example, the Multi-AP operation can be classified into various technologies/types/formats/protocols, etc. For example, the Multi-AP operation can include Coordinated TDMA (C-TDMA) that distinguishes wireless resources allocated to multiple APs based on a time axis (time domain). Additionally or alternatively, the Multi-AP operation can include Coordinated OFDMA (C-OFDMA) that distinguishes wireless resources allocated to multiple APs based on a frequency axis (time domain). Additionally or alternatively, the Multi-AP operation can include Coordinated Spatial Reuse (C-SR) that applies Spatial Reuse (SR) to at least one AP. Additionally or alternatively, the Multi-AP operation can include Coordinated beamforming (CBF)/nulling that nulls and transmits interference generated from neighbors (e.g., adjacent APs/STAs, and/or OBSS APs/OBSS STAs). Additionally or alternatively, the Multi-AP operation may include AP selection in which an AP with a good channel condition among neighboring APs (e.g., at least one AP located within a BSS or OBSS and with a good channel condition) transmits. Additionally or alternatively, the Multi-AP operation may include Joint Transmission (JTX) or JT in which multiple APs (e.g., multiple APs included in the same BSS/OBSS, or multiple APs included in different BSS/OBSS) cooperate to perform simultaneous transmission and reception, and JTX/JT may be implemented based on Joint Beamforming or Joint MU-MIMO.

FIG. 15 illustrates an example of Coordinated OFDMA (C-OFDMA). The illustrated AP1 can transmit a PPDU/signal to STA1, and AP2 can transmit a PPDU/signal to STA2. The transmission from AP1 and the transmission from AP2 can be performed in the same/overlapping time interval. The transmission from AP1 to STA1 can be performed based on a first frequency band, and the transmission from AP2 to STA2 can be performed based on a second frequency band different from the second frequency band. For example, in FIG. 15, STA1 and AP1 can be included in a BSS, and STA2 and AP2 can be included in an OBSS. That is, STA2 can be an unassociated STA to AP1, and STA1 can be an unassociated STA to AP2.

Although not illustrated in FIG. 15, an example of Coordinated TDMA (C-TDMA) is also possible. For example, the acquired TXOP can be divided into specific time units (e.g., slots), and the divided slots can be sequentially assigned to multiple different APs.

The above-described C-OFDMA example can be further modified as follows. For example, an AP (e.g., AP1) that has acquired a TXOP can share frequency resources with at least one neighboring AP (e.g., AP2 in the BSS/OBSS). For example, shared frequency resources can be defined on a resource unit (RU) basis or a subchannel basis. For example, for flexibility, frequency resources can be shared from AP1 to AP2 in 20/40/80 MHz subchannels or 242/484/996-tone RU units.

AP1, performing C-OFDMA, can act as a sharing AP or a master AP. That is, AP1 can request at least one neighboring AP (e.g., AP2 in the BSS/OBSS) to report information about the channel and/or buffer status. Based on this, AP1 can obtain a TXOP and share a part of the frequency resource (e.g., a 20 MHz subchannel or a RU of a certain size) with at least one AP in the vicinity (e.g., AP2 existing in the BSS/OBSS) within all or part of the time interval related to the TXOP.

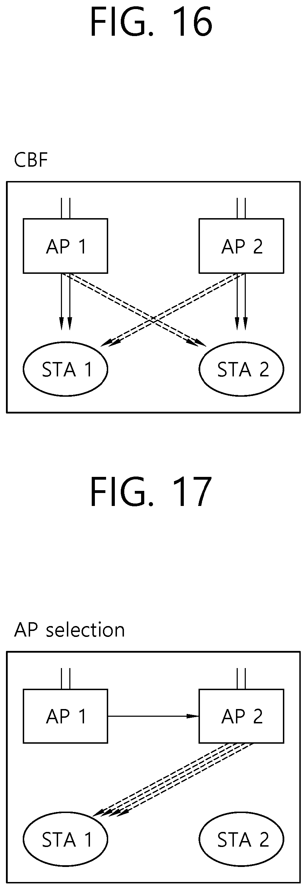

FIG. 16 illustrates an example of Coordinated Beamforming (CBF). The illustrated AP1 may transmit a PPDU/signal to STA1, and AP2 may transmit a PPDU/signal to STA2. The transmission from AP1 and the transmission from AP2 may be performed in the same/overlapping time interval. The transmission from AP1 and the transmission from AP2 may be performed through the same/overlapping frequency band. In order to reduce interference caused to STA2 by AP1, AP1 may perform nulling/beamforming toward STA2, and in order to reduce interference caused to STA1 by AP2, AP2 may perform nulling/beamforming toward STA1. For example, such nulling/beamforming may be implemented in a manner of positioning a radiation null to a neighboring unassociated STA. The above-described nulling/beamforming may make a specific AP invisible to a neighboring unassociated STA. For example, the above-described nulling/beamforming may make AP1 (or AP2) invisible to STA2 (or STA1).

For example, in FIG. 16, STA1 and AP1 may be included in the BSS, while STA2 and AP2 may be included in the OBSS. In other words, STA2 may be an unassociated STA to AP1, and STA1 may be an unassociated STA to AP2.

Although not illustrated in FIG. 16, control signals (e.g., coordination frames) for nulling/beamforming between AP1 and STA2 and/or nulling/beamforming between AP2 and STA1 may be transmitted and received over the backhaul link between AP1 and AP2.

FIG. 17 illustrates an example of AP selection. The illustrated AP2 is judged to have a better channel condition than AP1. AP1 transmits its data/signal to AP2 via a backhaul link, and AP2 can transmit a signal to STA1 instead of AP1. For example, in FIG. 17, STA1 and AP1 may be included in a BSS, and STA2 and AP2 may be included in an OBSS. In other words, STA2 may be an unassociated STA to AP1, and STA1 may be an unassociated STA to AP2.

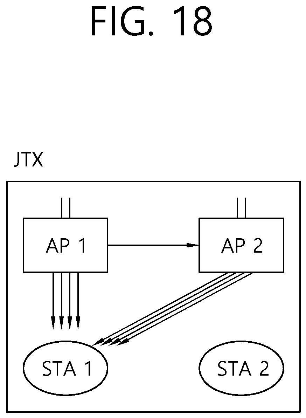

FIG. 18 illustrates an example of JTX/JT. The illustrated AP1 can transmit to STA1 together with AP2. For example, the PPDU/signal transmitted from AP2 to STA1 may be all or part of the same as the PPDU/signal transmitted from AP1 to STA1. For example, the PPDU/signal transmitted from AP2 to STA1 may be simultaneously transmitted through the same/overlapping frequency band as the PPDU/signal transmitted from AP1 to STA1. For example, the PPDU/signal transmitted from AP2 to STA1 may be a signal transmitted from AP1 through a backhaul link. For example, in FIG. 18, STA1 and AP1 may be included in a BSS, and STA2 and AP2 may be included in an OBSS. That is, STA2 may be an unassociated STA to AP1, and STA1 may be an unassociated STA to AP2.

More specifically, in FIG. 18, AP1 can transmit a coordination request (or can be named variously, such as a first request, a control request, etc.) to AP2 and receive a coordination response (or can be named variously, such as a first response, a control response, etc.) from AP2. Through the exchange of the request/response, information about coordination between AP1 and AP2 (e.g., information about whether AP1 and AP2 will perform simultaneous transmission to STA1), information about the point in time when coordination starts, information about the point in time when AP1 and AP2 start simultaneous transmission to STA1, information about data shared between AP1 and AP2, etc. can be exchanged. AP1 can share its data with AP2 via the backhaul link. Thereafter, AP1 can transmit a coordination trigger frame (or can be named variously, such as a trigger frame) to AP2 and perform simultaneous transmission to STA1 based on the trigger frame.

### <Embodiments applicable to this specification>

To enable terminals to maintain continuous WLAN connectivity over a wider area, numerous APs are being installed adjacent to each other. However, overlapping BSSs of multiple APs can lead to issues such as radio interference and transmission collisions between APs. To address these issues, various technologies have been proposed to coordinate APs across frequency, time, and spatial domains (e.g., RU selection, joint transmission, nulling, etc.). Furthermore, attention should be paid to the various issues that may arise during inter-AP coordination.

In EHT (802.11be), a technology was proposed to allocate some time within the TXOP acquired by the AP to support peer-to-peer (P2P) transmission to non-AP STAs. To this end, a new TXOP Sharing Mode subfield was defined in the Common Info field of the existing MU-RTS Trigger frame, and the MU-RTS (Multi User-Request To Send) Trigger frame when this value is nonzero is referred to as an MU-RTS TXOP Sharing (TXS) Trigger frame (TF). If the value of the TXOP Sharing mode is 1, the non-AP STA supports one or more (non-TB) PPDU transmissions to the AP, and if the value of the TXOP Sharing mode is 2, the non-AP STA supports P2P transmission in addition to (non-TB) PPDU transmissions to the AP.

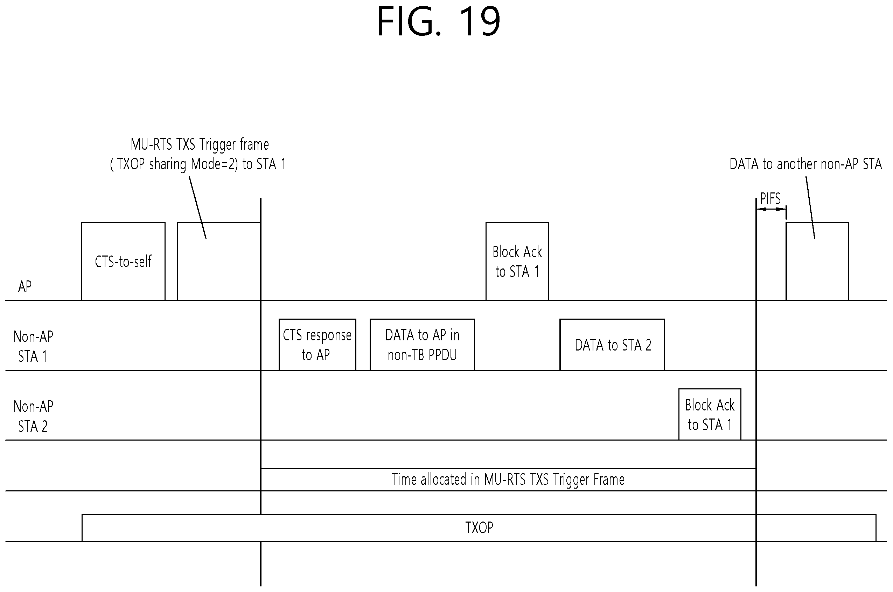

FIG. 19 illustrates an example of an operation of an MU-RTS TXS trigger frame based on a value of a TXOP Sharing Mode subfield being 2.

FIG. 19 illustrates an example of an operation based on a TXOP Sharing mode value being 2. Based on an AP transmitting an MU-RTS TXS TF including time allocation information (Time allocated in MU-RTS TXS Trigger Frame in FIG. 19) to a non-AP STA 1, the non-AP STA 1 may perform a P2P transmission to a non-AP STA 2 after responding with a Clear-To-Send (CTS).

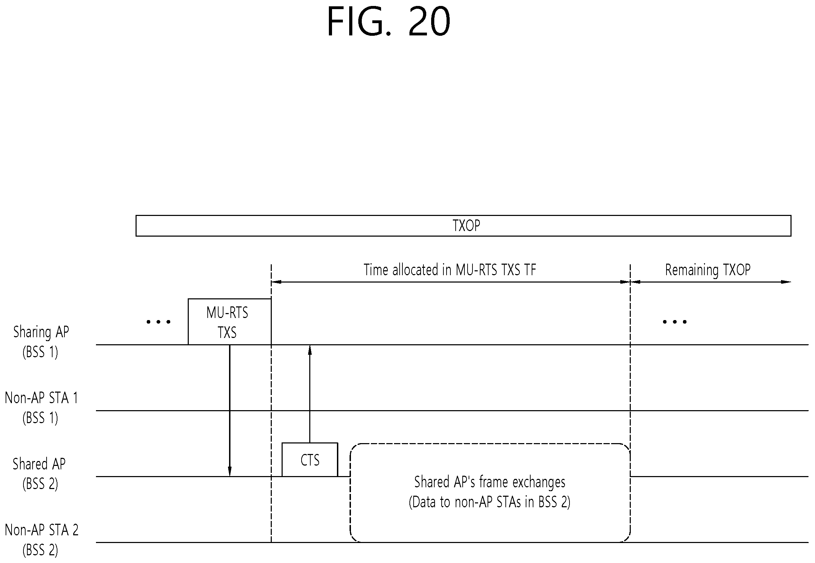

FIG. 20 illustrates an example of a coordinated TDMA operation.

Meanwhile, based on utilizing a conventional Triggered TXOP Sharing protocol for Multi-AP coordination, frame exchange may be performed without affecting each other by distinguishing transmissions within a BSS of each coordinated AP in units of time. For example, FIG. 20 illustrates an example of Coordinated-Time Division Multiplexing Access (C-TDMA) according to a time unit among coordination methods between coordinated APs. At this time, an AP in the conventional Triggered TXS protocol plays a role of an AP sharing a TXOP in a Multi-AP coordination operation, and an STA in the conventional Triggered TXS protocol may play a role of an AP with which the TXOP is shared in the Multi-AP coordination operation. In the present disclosure, an AP sharing a TXOP is referred to as a Sharing AP (SAP), and an AP provided with the TXOP from the SAP is referred to as a Shared AP (DAP). Here, the SAP sharing the TXOP is not limited only to an AP STA and may include a non-AP STA sharing the TXOP. In addition, the DAP with which the TXOP is shared is not limited only to an AP STA and may include a non-AP STA with which the TXOP is shared (or which performs transmission and reception with an AP STA with which the TXOP is shared). Also, a frame exchange between the DAP and a non-AP STA belonging to a DAP BSS or the SAP during a time allocated to the DAP is referred to as a BSS frame exchange (FE) of the DAP. For example, RTS/CTS frame exchange between the DAP and a non-AP STA followed by data frame transmission and block ACK frame response, UL data frame transmission of non-AP STAs for a trigger frame delivered from the DAP or data frame transmission of the DAP for a trigger frame delivered from the SAP may be performed as a frame exchange.

In order for each STA to perform the frame exchange described above, the STA must occupy the medium through Channel Access (CA). For example, all STAs basically listen to the primary channel of the BSS and first perform Clear Channel Access (CCA) on the primary channel. Specifically, based on the primary channel being in an IDLE state and the Back-off Counter (BC) reaching 0, each STA may transmit a frame by including both the primary channel and secondary channels in an IDLE state. In the present specification, the primary channel and secondary channel are referred to as follows.
P20: Primary 20 MHz channel
S20: Secondary 20 MHz channel (based on the bandwidth being 40 MHz, meaning that the other 20 MHz excluding P20 is the secondary channel)
S40: Secondary 40 MHz channel (based on the bandwidth being 80 MHz, meaning that the other 40 MHz excluding P20/S20 is the secondary channel)
S80: Secondary 80 MHz channel (based on the bandwidth being 160 MHz, meaning that the other 80 MHz excluding P20/S20/S40 is the secondary channel)
S160: Secondary 160 MHz channel (based on the bandwidth being 320 MHz, meaning that the other 160 MHz excluding P20/S20/S40/S80 is the secondary channel)
S320: Secondary 320 MHz channel (based on the bandwidth being 640 MHz, meaning that the other 320 MHz excluding P20/S20/S40/S80/S160 is the secondary channel)

For example, a STA having a BSS operating channel width of 80 MHz bandwidth waits until P20 becomes IDLE without reducing the BC based on P20 being in a BUSY state due to a result of CCA or a Network Allocation Vector (NAV) configuration. Thereafter, based on P20 becoming IDLE, the STA reduces the BC through a back-off process, and based on the BC reaching 0, the STA performs CCA on S20 and S40 and transmits a PPDU with 80 MHz bandwidth based on determining that the state is IDLE.

The mechanism based on the primary channel has the advantage that frame exchange between APs and non-AP STAs is protected without interference, but always wastes the medium in that the secondary channel in an IDLE state cannot be used based on the primary channel being in a BUSY state. Therefore, a Secondary Channel Access (SCA) or Non-Primary Channel Access (NPCA) method that may reduce the waste of the medium by accessing the secondary channel based on the primary channel being in a BUSY state may be defined and implemented, and based on this method being applied to the C-TDMA operating environment described above, it may be helpful for C-TDMA operation and may also increase the medium utilization. The secondary channel may also be referred to as a non-primary channel or a Non-Primary Channel Access (NPCA) primary channel.

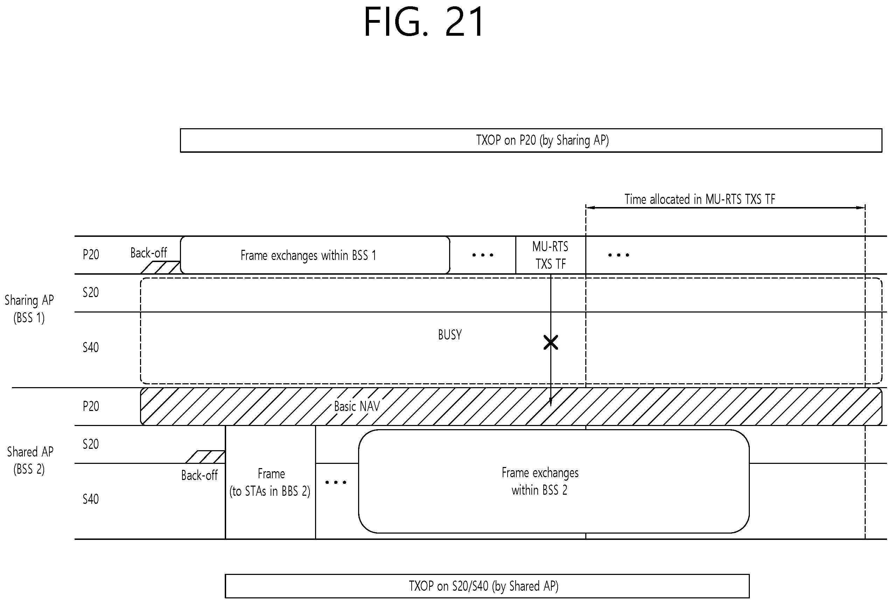

FIG. 21 illustrates an example of a case where a SCA method is applied in a C-TDMA environment.

For example, as illustrated in FIG. 21, based on the SAP acquiring a TXOP through a back-off process and performing individual frame exchange first, the DAP(s) that recognize the medium as being in a BUSY state may perform frame exchange with non-AP STAs on the secondary channel using SCA for a duration that does not exceed the entire TXOP duration acquired by the SAP on P20. However, additional considerations exist for applying SCA to a C-TDMA environment. Specifically, as illustrated in FIG. 21, based on the DAP performing frame exchange with non-AP STAs on the secondary channel (e.g., S20/S40 in FIG. 21) using SCA and an MU-RTS TXS TF for allocating a TXOP from the SAP to the DAP being transmitted, the DAP may not receive it. For example, it may be regarded that the SAP performed unnecessary TXOP sharing.

Therefore, the present specification defines rules for enabling DAPs that do not serve as a SAP to effectively perform SCA on the secondary channel and proposes an SCA method considering a C-TDMA operating environment based on the rules. Specifically, a DAP for which the SAP has scheduled TXOP sharing (referred to as a selected DAP in the present specification) may perform Frame Exchange (FE) using SCA until the TXOP sharing starts. In addition, APs for which the SAP has not scheduled TXOP sharing (referred to as unselected AP(s) in the present specification) may perform FE using SCA until the entire TXOP of the SAP ends.

The specific terms (names) proposed in the present specification may be changed and are not limited thereto.

The present specification defines rules and methods for enabling DAP(s) that do not serve as a SAP to perform SCA in a C-TDMA operating environment.

### 1. Multi-AP Selection Procedure for C-TDMA

This section describes the Multi-AP selection procedure that enables DAP(s) to determine whether to perform SCA. This process may be regarded as a process of notifying the selected DAP that the SAP is scheduled to perform TXOP sharing for C-TDMA operation or a process of determining the selected DAP. In addition, this may be regarded as a process of notifying not-selected AP(s) that TXOP sharing is not performed within the current TXOP.

### 1.1.1. Request/Response Based Selection Method

An AP that acquires a TXOP and serves as a SAP may transmit a frame that solicits a response frame from a target DAP with which the AP intends to share the TXOP (i.e., a Selection Request frame). The frame at this time collectively refers to reusing the structure and a specific type of an existing Basic Trigger frame, defining a new type of Trigger frame, or defining a new Control frame or Management frame.

The selection request frame transmitted in the Multi-AP selection process for C-TDMA proposed in the present specification may include contents based on one or a combination of the following contents. The terms (names) of the contents defined below may be changed and are not limited to specific names.
A. Multi-AP group ID: An ID for a set of APs configured for Multi-AP coordination (e.g., 0, 1, 2, ...)
B. DAP ID: An ID assigned by the SAP within the configured Multi-AP group (e.g., 0, 1, 2, ...)
C. SAP capability: Indicates the capability of the AP to operate as a SAP

-> For example, utilizing the QoS Characteristic element included in the SCS request/response frame. For example, utilizing Reserved bits (3 bits) within the Control Info field of the QoS Characteristic element. Specifically, defining a 1-bit signaling among the Reserved bits to indicate SAP capability information.

bit 0: Indicates that the AP is unable to operate as a SAP
bit 1: Indicates that the AP has the capability to operate as a SAP

For example, utilizing the Common Info field included in the Trigger frame. For example, utilizing EHT Reserved (7 bits) or Reserved bits (4 bits) of the Common Info field. Specifically, defining a new subfield for Multi-AP coordination by utilizing EHT Reserved and defining a 1-bit signaling within the subfield to indicate SAP capability information. Specifically, defining a 1-bit signaling to indicate SAP capability information by utilizing Reserved bits within the Common Info field.

### D. SAP operation signaling: Indicates that the AP is currently operating as a SAP and is sharing a TXOP with the DAP

-> For example, utilizing the QoS Characteristic element included in the QoS data frame. For example, utilizing Reserved bits (3 bits) within the Control Info field of the QoS Characteristic element. Specifically, defining a 1-bit signaling among the Reserved bits to indicate SAP operation signaling information.

bit 0: Indicates that the AP serves as a SAP but does not perform TXOP sharing
bit 1: Indicates that the AP serves as a SAP and performs TXOP sharing with the DAP

For example, utilizing the Common Info field included in the Trigger frame. For example, utilizing EHT Reserved (7 bits) or Reserved bits (4 bits) of the Common Info field. Specifically, defining a new subfield for Multi-AP coordination by utilizing EHT Reserved and defining a 1-bit signaling within the subfield to indicate SAP operation signaling information. Specifically, defining a 1-bit signaling to indicate SAP operation signaling information by utilizing Reserved bits within the Common Info field.

### E. Multi-AP coordination type: Information on Multi-AP coordination transmission schemes such as C-OFDMA, C-TDMA, J-TX and C-SR

### F. Address: Address information of the DAP that is the target of TXOP sharing among the participating APs (e.g., BSS color, BSSID for Multi-AP, or the information A and B defined above)

### G. Operating channel: Information on the operating primary channel and punctured channel

-> For example, channel information commonly operating for smooth coordination among APs participating in C-TDMA. For example, primary channel information that APs participating in C-TDMA may commonly operate on. Specifically, a new field serving the role of the CCSF0 field within the EHT Operation Information field may be defined to indicate the channel center frequency index for 20/40/80 MHz channels.

Specifically, a new field serving the role of the CCSF0 field within the EHT Operation Information field may be defined to indicate the channel center frequency for the primary 80 MHz channel of a 160 MHz channel or the channel center frequency for the primary 160 MHz channel of a 320 MHz channel.

In addition, a new field serving the role of the CCSF1 field within the EHT Operation Information field may be defined to indicate the channel center frequency for a 160 MHz channel or the channel center frequency for a 320 MHz channel.
-> For example, punctured channel information of APs participating in C-TDMA.

Specifically, a new field serving the role of the Disabled Subchannel Bitmap field within the EHT Operation Information field may be defined to indicate punctured 20 MHz subchannels using a bitmap.
bit value of 0 in the bitmap: Indicates that the corresponding 20 MHz subchannel is not punctured
bit value of 1 in the bitmap: Indicates that the corresponding 20 MHz subchannel is punctured

The primary channel of the DAP may be included within the operating channel of the SAP.

The primary channel of the DAP may be included within the operating channel excluding the punctured channel of the SAP.

### H. Operating bandwidth: Information on the operating bandwidth and maximum bandwidth

-> For example, bandwidth (BW) information commonly operating for smooth coordination among APs participating in C-TDMA. Specifically, the operating channel and primary channel information described above may be utilized.

For example, maximum bandwidth information of APs participating in C-TDMA. Specifically, a new field serving the role of the Channel Width field within the Control field of the EHT Operation Information field may be defined to indicate the channel width, which is the BSS BW information of each AP.
Set to 0: Indicates 20 MHz bandwidth
Set to 1: Indicates 40 MHz bandwidth
Set to 2: Indicates 80 MHz bandwidth
Set to 3: Indicates 160/80+80 MHz bandwidth
Set to 4: Indicates 320/160+160 MHz bandwidth

The remaining values from 5 to 7 may be reserved.
-> For example, BW field information within the SIG-A field
-> For example, UL BW field information included within the Common Info field of the MU-RTS TXS TF

The bandwidth of the DAP may be included within the entire bandwidth of the SAP.
-> For example, modifying/redefining the Medium Time field of the QoS Characteristics element to include a new sub-field and newly adding a field for indicating bandwidth. Specifically, a new field serving the role of the Channel Width field within the Control field of the EHT Operation Information field may be defined to indicate the channel width, which is the BSS BW information of each AP.

Set to 0: Indicates 20 MHz bandwidth
Set to 1: Indicates 40 MHz bandwidth
Set to 2: Indicates 80 MHz bandwidth
Set to 3: Indicates 160/80+80 MHz bandwidth
Set to 4: Indicates 320/160+160 MHz bandwidth

The remaining values from 5 to 7 may be reserved.

### I. Scheduled TXOP Duration (Nominal TXOP Duration): A duration during which APs participating in C-TDMA operation coordinate with each other and perform individual Frame Exchange (FE) and TXOP sharing, or a nominal TXOP duration scheduled by the SAP for C-TDMA operation

-> For example, indicated by defining a new field including the Scheduled TXOP Duration. Specifically, newly defined as a Scheduled Duration field (tentative name) to indicate information required for C-TDMA operation and the Scheduled TXOP Duration value.
-> For example, indicated by defining a new element including the Scheduled TXOP Duration. Specifically, newly defined as a C-TDMA Operation element (tentative name) to indicate information required for C-TDMA operation and the Scheduled TXOP Duration value.
-> For example, indicated by including the Scheduled TXOP Duration within a QoS Characteristic element that may be used to include negotiation information in a pre-negotiation process for C-TDMA operation or within an element that may be newly defined for negotiation in C-TDMA.
-> For example, indicated by including the Scheduled TXOP Duration within a UHR Operation element that may be used to include announcement information in an announcement process of each AP for C-TDMA operation or within an element that may be newly defined for announcement in C-TDMA.

### J. Expected TXOP sharing timing: A TXOP sharing timing expected or scheduled by the SAP

-> For example, indicated by defining a new field including the Expected TXOP sharing timing. Specifically, newly defined as an Expected TXOP sharing timing field (tentative name) to indicate information required for C-TDMA operation and the Expected TXOP sharing timing value.
-> For example, indicated by defining a new element including the Expected TXOP sharing timing. Specifically, newly defined as a C-TDMA Operation element (tentative name) to indicate information required for C-TDMA operation and the Expected sharing timing value.

### K. Low Latency Traffic Information: Information related to Low Latency Traffic that each AP intends to transmit or receive

-> For example, information of the QoS Characteristic element included in the SCS request/response frame. For example, utilizing the Delay Bound field information among the information of the QoS Characteristic element. Specifically, the Delay Bound field value for QoS traffic that each AP intends to transmit may be utilized as Low Latency Traffic information. Through this, the SAP may utilize this to confirm the necessity of TXOP sharing or to update the existing value for a DAP that may complete the transmission of an MSDU or A-MSDU within the time at which the TXOP duration to be shared ends (i.e., the pre-negotiated Low Latency Traffic information or the Delay Bound field value is shorter than the allocated time).
-> For example, utilizing the MSDU Lifetime field information among the information of the QoS Characteristic element. Specifically, the MSDU Lifetime field value for QoS traffic that each AP intends to transmit may be utilized as Low Latency Traffic information. Through this, the SAP may utilize this to confirm the necessity of TXOP sharing or to update the existing value for a DAP that does not discard the MSDU within the time at which the TXOP duration to be shared ends (i.e., the pre-negotiated Low Latency Traffic information or the MSDU Lifetime field value does not expire within the allocated time).
-> For example, utilizing the Service Start Time field information among the information of the QoS Characteristic element. Specifically, the Service Start Time field value for QoS traffic that each AP intends to transmit may be utilized as Low Latency Traffic information. Through this, the SAP may utilize this to confirm the necessity of TXOP sharing or to update the existing value for a DAP that may start the expected Service Period and frame exchange within the time at which the TXOP duration to be shared ends (i.e., the pre-negotiated Low Latency Traffic information or the Service Start Time field value is shorter than the allocated time).
-> For example, TXOP sharing request information requested/indicated by an AP that requires transmission of Low Latency Traffic. For example, time-bound information of Low Latency Traffic requested/indicated by an AP that requires transmission of Low Latency Traffic. For example, a minimum time-bound by which transmission of Low Latency Traffic must start. For example, a maximum time-bound by which transmission of Low Latency Traffic must be successfully completed.
-> For example, arrival rate information of Low Latency Traffic requested/indicated by an AP that requires transmission of periodic Low Latency Traffic. For example, the arrival rate of Low Latency Traffic since the last reporting event.
-> For example, Low Latency Traffic information may include Traffic Identifier (TID)/Access Category (AC) information.

### L. Coordination priority: Indicates the priority for the currently operating coordination transmission among Multi-AP coordination schemes, or indicates the priority or protection level for efficient operation of C-TDMA transmission

-> For example, utilizing EHT Reserved (7 bits) or Reserved (4 bits) of the Common Info field.

Specifically, utilizing 2 bits corresponding to EHT Reserved or Reserved to indicate the priority (or protection level) of the current C-TDMA operation.
- bit 0: Indicates that the coordination transmission has a priority (or protection level) of level 0. For example, this may mean that no separate protection is required for TXOP sharing and TXOP return in C-TDMA operation.
- bit 1: Indicates that the coordination transmission has a priority (or protection level) of level 1-1. For example, this may mean that separate protection is required for TXOP sharing in C-TDMA operation.
- bit 2: Indicates that the coordination transmission has a priority (or protection level) of level 1-2. For example, this may mean that separate protection is required for TXOP return in C-TDMA operation.
- bit 3: Indicates that the coordination transmission has a priority (or protection level) of level 2. For example, this may mean that protection is required for both TXOP sharing and TXOP return in C-TDMA operation.

In addition, the selection response frame transmitted in the Multi-AP selection process for C-TDMA proposed in the present specification may include contents based on one or a combination of the following contents. The terms (names) of the contents defined below may be changed and are not limited to specific names.
A. Multi-AP group ID: An ID for a set of APs configured for Multi-AP coordination (e.g., 0, 1, 2, ...)
B. DAP ID: An ID assigned by the SAP within the configured Multi-AP group (e.g., 0, 1, 2, ...)
C. Address: Address information of the SAP (e.g., BSS color, BSSID for Multi-AP, or the information A and B defined above)
D. Operating channel: Information on the operating primary channel and punctured channel

-> For example, channel information commonly operating for smooth coordination among APs participating in C-TDMA
-> For example, primary channel information that APs participating in C-TDMA may commonly operate on.

Specifically, a new field serving the role of the CCSF0 field within the EHT Operation Information field may be defined to indicate the channel center frequency index for 20/40/80 MHz channels.

Specifically, a new field serving the role of the CCSF0 field within the EHT Operation Information field may be defined to indicate the channel center frequency for the primary 80 MHz channel of a 160 MHz channel or the channel center frequency for the primary 160 MHz channel of a 320 MHz channel.

In addition, a new field serving the role of the CCSF1 field within the EHT Operation Information field may be defined to indicate the channel center frequency for a 160 MHz channel or the channel center frequency for a 320 MHz channel.
-> For example, punctured channel information of APs participating in C-TDMA.

Specifically, a new field serving the role of the Disabled Subchannel Bitmap field within the EHT Operation Information field may be defined to indicate punctured 20 MHz subchannels using a bitmap.
- bit value of 0 in the bitmap: Indicates that the corresponding 20 MHz subchannel is not punctured
- bit value of 1 in the bitmap: Indicates that the corresponding 20 MHz subchannel is punctured

-> The primary channel of the DAP may be included within the operating channel of the SAP.
-> The primary channel of the DAP may be included within the operating channel excluding the punctured channel of the SAP.

### E. Operating bandwidth: Information on the operating bandwidth and maximum bandwidth

-> For example, BW information commonly operating for smooth coordination among APs participating in C-TDMA.

Specifically, the operating channel and primary channel information described above may be utilized.
-> For example, maximum bandwidth information of APs participating in C-TDMA.

Specifically, a new field serving the role of the Channel Width field within the Control field of the EHT Operation Information field may be defined to indicate the channel width, which is the BSS BW information of each AP.
- Set to 0: Indicates 20 MHz bandwidth
- Set to 1: Indicates 40 MHz bandwidth
- Set to 2: Indicates 80 MHz bandwidth
- Set to 3: Indicates 160/80+80 MHz bandwidth
- Set to 4: Indicates 320/160+160 MHz bandwidth
- The remaining values from 5 to 7 may be reserved.

-> For example, BW field information within the SIG-A field
-> For example, UL BW field information included within the Common Info field of the MU-RTS TXS TF
-> The bandwidth of the DAP may be included within the entire bandwidth of the SAP.
-> For example, modifying/redefining the Medium Time field of the QoS Characteristics element to include a new sub-field and newly adding a field for indicating bandwidth.

Specifically, a new field serving the role of the Channel Width field within the Control field of the EHT Operation Information field may be defined to indicate the channel width, which is the BSS BW information of each AP.
- Set to 0: Indicates 20 MHz bandwidth
- Set to 1: Indicates 40 MHz bandwidth
- Set to 2: Indicates 80 MHz bandwidth
- Set to 3: Indicates 160/80+80 MHz bandwidth
- Set to 4: Indicates 320/160+160 MHz bandwidth
- The remaining values from 5 to 7 may be reserved.

### F. Required TXOP duration: Information related to the TXOP duration that each DAP wishes to be shared

-> For example, indicated by defining a new field including the Required TXOP Duration.

Specifically, newly defined as a Required Duration field (tentative name) to indicate information required for C-TDMA operation and the Required TXOP Duration value.
-> For example, indicated by defining a new element including the Required TXOP Duration.

Specifically, newly defined as a C-TDMA Operation element (tentative name) to indicate information required for C-TDMA operation and the Required TXOP Duration value.
-> For example, indicated by including the Required TXOP Duration within a QoS Characteristic element that may be used to include negotiation information in a pre-negotiation process for C-TDMA operation or within an element that may be newly defined for negotiation in C-TDMA.
-> For example, indicated by including the Required TXOP Duration within a UHR Operation element that may be used to include announcement information in an announcement process of each AP for C-TDMA operation or within an element that may be newly defined for announcement in C-TDMA.

### G. Buffer status: Buffer status information of each DAP

### H. TXOP sharing requirement: Indicates whether TXOP sharing is required based on the expiration of pre-negotiated Low Latency Traffic Information or the absence of TXOP sharing necessity (e.g., based on individual FE already having been performed)

-> For example, indicating and responding to whether TXOP sharing is required using 1 bit.

- bit 0: Indicates that the DAP that received the selection request frame does not require TXOP sharing.
- bit 1: Indicates that the DAP that received the selection request frame requires TXOP sharing.

### I. Low Latency Traffic Information: Information related to Low Latency Traffic that each AP intends to transmit or receive

-> For example, information of the QoS Characteristic element included in the SCS request/response frame
-> For example, utilizing the Delay Bound field information among the information of the QoS Characteristic element.

Specifically, the Delay Bound field value for QoS traffic that each AP intends to transmit may be utilized as Low Latency Traffic information.
- Includes updated Low Latency Traffic information or Delay Bound field value based on the value being changed differently from the pre-negotiated Low Latency Traffic Information.

-> For example, utilizing the MSDU Lifetime field information among the information of the QoS Characteristic element.

Specifically, the MSDU Lifetime field value for QoS traffic that each AP intends to transmit may be utilized as Low Latency Traffic information.
- Includes updated Low Latency Traffic information or MSDU Lifetime field value based on the value being changed differently from the pre-negotiated Low Latency Traffic Information.

-> For example, utilizing the Service Start Time field information among the information of the QoS Characteristic element.

Specifically, the Service Start Time field value for QoS traffic that each AP intends to transmit may be utilized as Low Latency Traffic information.
- Includes updated Low Latency Traffic information or Service Start Time field value based on the value being changed differently from the pre-negotiated Low Latency Traffic Information.
   -> For example, TXOP sharing request information requested/indicated by an AP that requires transmission of Low Latency Traffic
   -> For example, time-bound information of Low Latency Traffic requested/indicated by an AP that requires transmission of Low Latency Traffic
- For example, a minimum time-bound by which transmission of Low Latency Traffic must start
- For example, a maximum time-bound by which transmission of Low Latency Traffic must be successfully completed
   -> For example, arrival rate information of Low Latency Traffic requested/indicated by an AP that requires transmission of periodic Low Latency Traffic
- For example, the arrival rate of Low Latency Traffic since the last reporting event
   -> For example, Low Latency Traffic information may include Traffic Identifier (TID)/Access Category (AC) information.

### J. Status Code: Accept/Reject/Recommendation information for the selection request (i.e., the DAP selected by the SAP may Accept or Reject based on whether TXOP sharing is currently required, which may replace the TXOP sharing requirement information presented above)

-> For example, Accept or Success (e.g., SUCCESS)
-> For example, Reject or Reject including Recommendation.

Specifically, a Reject code including a Reject reason (e.g., REJECTED_BAD_SUPPORTED_CHANNELS).

Specifically, a Reject code including a Recommendation (e.g., REJECTED_WITH_SUGGESTED_CHANGES)

Based on the value of the Status Code including Reject or Recommendation, information for a new selection request may be included. For example, the DAP that received the selection request frame may include additional information on the operating channel and bandwidth, Required TXOP duration and Low Latency Traffic Information described above.

<Reselection procedure>: Based on not receiving a response frame (e.g., selection response frame) from the DAP, the absence of a TXOP sharing request from the DAP (i.e., TXOP sharing requirement field = 0), or receiving a Status Code including Reject from the DAP, the SAP may perform a reselection procedure. The reselection procedure for C-TDMA operation may transmit a frame for an individual selection procedure to other candidate DAP(s) or may not perform a separate reselection procedure (e.g., based on a single selection procedure failure, the reselection procedure may not be performed).

### 1.1.2. A-Control Based Selection Method

Similarly to the Request/Response based selection method described in 1.1.1 above, which performs DAP selection by transmitting a selection request frame and receiving a selection response frame in response, Multi-AP selection using an A-Control field may be performed. For example, a new type of Control Information field may be defined by utilizing the Reserved values (7~14) of the Control ID field within the control field.

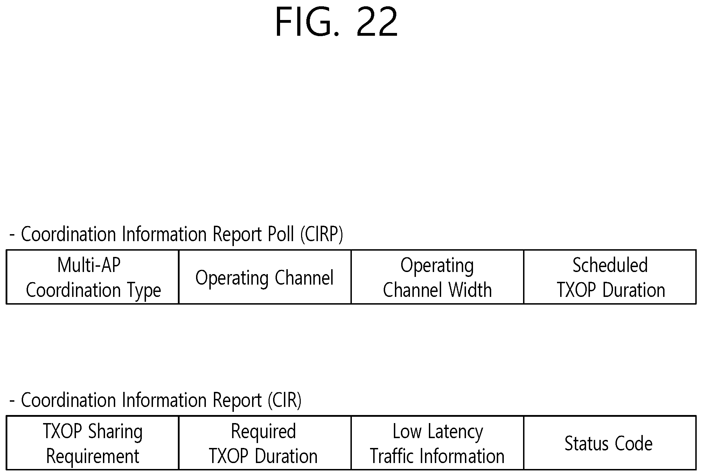

FIG. 22 illustrates an example of CIRP contents and a CIR field format for an A-Control based selection method.

Specifically, C-TDMA related information may be reported from the DAP by defining a new type of Trigger frame (e.g., Coordination Information Report Poll (tentative name)) for polling C-TDMA information (utilizing reserved values 8~15 of the trigger type field). For example, the DAP that receives this may report C-TDMA information to the SAP by including separate report contents in a Coordination Information Report (CIR) Control field (tentative name). To this end, a new rule that enables the AP to transmit a TB PPDU needs to be defined. The aforementioned new type of CIR Control field may include, as fields, contents based on one or a combination of the contents defined and listed in the Request/Response based selection method of 2.1.1. For example, FIG. 21 illustrates an example of contents that may be included in a new type of Trigger frame transmitted by the transmitting side (i.e., SAP) and an example of a CIR Control field that may be included by the receiving side (i.e., DAP). The information (contents), number of bits of fields, or terms (names) that may be included in the Trigger frame and A-Control field presented in this example may be changed and are not limited thereto.

<Reselection procedure>: Based on not receiving a response frame from the DAP, the absence of a TXOP sharing request from the DAP (i.e., TXOP sharing requirement field = 0), or receiving a Status Code including Reject from the DAP, the SAP may perform a reselection procedure. The reselection procedure for C-TDMA operation may transmit a Trigger frame for an individual selection procedure to other candidate DAP(s) or may not perform a separate reselection procedure (e.g., based on a single selection procedure failure, the reselection procedure may not be performed).

### 1.1.3. MU-RTS Trigger Frame/CTS Frame Based Selection Method

Similarly to the Request/Response based selection method described in 1.1.1 above, which performs DAP selection by transmitting a selection request frame and receiving a selection response frame in response, Multi-AP selection using an MU-RTS TF or RTS frame may be performed. For example, an existing mode of the MU-RTS TXS TF (e.g., mode = 1 or 2) may be utilized or a new mode (e.g., mode = 3) may be defined using reserved bits.

Specifically, a new mode of MU-RTS TXS TF for announcing C-TDMA operation may be defined and transmitted to the corresponding DAP(s). To this end, a subfield for indicating a new mode may be defined, similarly to the Triggered TXOP Sharing Mode 1 (or 2) Support subfield within the EHT MAC Capabilities Information field. The DAP(s) may receive the MU-RTS TXS TF configured and indicated in the new mode, obtain information related to C-TDMA operation and respond with a CTS frame. The aforementioned new mode of MU-RTS TXS TF may include, in the Common Info field and User Info field by utilizing Reserved bits, contents based on one or a combination of the contents that may be included in the selection request frame in the Request/Response based selection method of 1.1.1. The information (contents), number of bits of fields, or terms (names) that may be included in the field may be changed and are not limited thereto. Based on announcing C-TDMA operation to multiple DAP(s) simultaneously, one or more User Info fields may exist.

Alternatively, as an alternative to the method of defining a separate signaling bit within the MU-RTS TXS TF to perform the Multi-AP selection procedure using the MU-RTS TXS TF among the types of MU-RTS TF, a separate signaling bit may be included in the MU-RTS TXS TF. For example, a new signaling bit indicating that the MU-RTS TXS TF was transmitted for the Multi-AP selection procedure in C-TDMA, rather than the aforementioned new TXS mode, may be defined and added.

### <Multi-AP Selection>: Indicates that the MU-RTS TXS TF is for the Multi-AP selection procedure (or Schedule announcement) in C-TDMA.

-> For example, utilizing EHT Reserved (7 bits) or Reserved (4 bits) of the Common Info field.

Specifically, defining a new field by utilizing 1 bit corresponding to EHT Reserved to indicate that the MU-RTS TXS TF was transmitted for the Multi-AP selection procedure.

Specifically, defining a new field by utilizing 1 bit corresponding to Reserved (e.g., B22 in EHT variant Common Info field) to indicate that the MU-RTS TXS TF was transmitted for the Multi-AP selection procedure.
-> The examples described above may commonly signal as follows.

- bit 0: Based on the MU-RTS TXS TF not being intended for the Multi-AP selection procedure. For example, in the case of bit 0, this may mean that the MU-RTS TXS TF may be transmitted for the purpose of TXOP sharing to an AP (or STA).
- bit 1: Indicates that the MU-RTS TXS TF was transmitted for the purpose of the Multi-AP selection procedure.

In addition, as an alternative to the method of defining a separate signaling bit to perform the Multi-AP selection procedure using the MU-RTS TXS TF, there is a method of utilizing the Allocation Duration field within the MU-RTS TXS TF transmitted by the SAP. For example, the SAP may indicate the timing of TXOP sharing to the target DAP using the duration included in the Duration/ID field of the MU-RTS TXS TF, and the Allocation Duration field within the User Info field for the target DAP may be set to a predefined value (e.g., 0 or the maximum value) to indirectly notify that the MU-RTS TXS TF was transmitted for the purpose of the Multi-AP selection procedure. This method may be decoded and recognized only by the target DAP (e.g., an AP whose information is included in the AID12 field of the User Info field).

<Reselection procedure>: Based on not receiving a response frame (e.g., CTS frame) from the DAP, the SAP may perform a reselection procedure. The reselection procedure for C-TDMA operation may transmit a frame for an individual selection procedure to other candidate DAP(s) or may not perform a separate reselection procedure (e.g., based on a single selection procedure failure, the reselection procedure may not be performed).

### 1.1.4. Unilateral Indication Based Selection Method

An AP that acquires a TXOP and serves as a SAP may transmit a frame that does not solicit a response frame from the target DAP with which the AP intends to share the TXOP. For example, unlike the Request/Response based selection method of 1.1.1 that receives a response frame from the DAP and updates or reflects the corresponding contents, this may be regarded as unilaterally indicating/notifying the target DAP of the SAP's TXOP sharing decision and related contents. The frame at this time collectively refers to reusing the structure and a specific type of an existing Basic Trigger frame, defining a new type of Trigger frame, or defining a new Control frame or Management frame.

As one example of a selection frame (or referred to as a notification frame) transmitted through this section (1.1.4 Unilateral Indication Based Selection Method), a Management frame including the following contents may be newly defined. The selection/notification frame may include contents based on one or a combination of the following contents, and their terms (names) may be changed and are not limited thereto.

First, the selection/notification frame transmitted through the Unilateral Indication Based Selection Method of 1.1.4 may be classified as an Action frame among the types of Management frames. In addition, the selection/notification frame may be classified as a UHR Action frame (tentative name) or a Protected UHR Action frame (tentative name) that may be newly defined in UHR (11bn), similarly to the EHT Action frame and Protected EHT Action frame newly defined in EHT (11be) among the Category types of Action frames. For example, the aforementioned selection/notification frame may be defined as one Action frame among the types utilizing the Action field of a UHR Action frame or a Protected UHR Action frame.

Therefore, an AP that acquires a TXOP and serves as a SAP may transmit a selection/notification frame to indicate to the target DAP that TXOP sharing for C-TDMA operation is scheduled.

The Action field of the Selection/Notification frame may include information based on one or a combination of the following. The names of the information defined below may be changed and are not limited thereto.

### A. Category: A value indicating the Category field defined in the Action field of an Action frame among Management frames

-> For example, a value indicating an EHT Action frame or a Protected EHT Action frame among 1-byte Category fields.

Specifically, a value indicating a UHR Action frame or a Protected UHR Action frame that may be newly defined in UHR.

### B. UHR Action (or) Protected UHR Action: A value indicating the action to be performed with the corresponding frame

-> For example, a value indicating a Link Reconfiguration Notify frame (example) among 1-byte Action fields within a Protected EHT Action frame.

Specifically, a C-TDMA Operation Selection/Notification frame (tentative name) is newly defined and indicated among 1-byte Action fields within a UHR Action frame or a Protected UHR Action frame that may be newly defined in UHR.

### C. Multi-AP group ID: An ID for a set of APs configured for Multi-AP coordination (e.g., 0, 1, 2, ...)

### D. DAP ID: An ID assigned by the SAP within the configured Multi-AP group (e.g., 0, 1, 2, ...)

### E. SAP capability: Indicates the capability of the AP to operate as a SAP

-> For example, utilizing the QoS Characteristic element included in the SCS request/response frame
-> For example, utilizing Reserved bits (3 bits) within the Control Info field of the QoS Characteristic element.

Specifically, defining a 1-bit signaling among the Reserved bits to indicate SAP capability information.
- bit 0: Indicates that the AP is unable to operate as a SAP.
- bit 1: Indicates that the AP has the capability to operate as a SAP.
   -> For example, utilizing the Common Info field included in the Trigger frame.
- For example, utilizing EHT Reserved (7 bits) or Reserved bits (4 bits) of the Common Info field.
- Specifically, defining a new subfield for Multi-AP coordination by utilizing EHT Reserved and defining a 1-bit signaling within the subfield to indicate SAP capability information.
- Specifically, defining a 1-bit signaling to indicate SAP capability information by utilizing Reserved bits within the Common Info field.

### F. SAP operation signaling: Indicates that the AP is currently operating as a SAP and is sharing a TXOP with the DAP

-> For example, utilizing the QoS Characteristic element included in the QoS data frame
-> For example, utilizing Reserved bits (3 bits) within the Control Info field of the QoS Characteristic element.

Specifically, defining a 1-bit signaling among the Reserved bits to indicate SAP operation signaling information.
- bit 0: Indicates that the AP serves as a SAP but does not perform TXOP sharing.
- bit 1: Indicates that the AP serves as a SAP and performs TXOP sharing with the DAP.
   -> For example, utilizing the Common Info field included in the Trigger frame.
- For example, utilizing EHT Reserved (7 bits) or Reserved bits (4 bits) of the Common Info field.

Specifically, defining a new subfield for Multi-AP coordination by utilizing EHT Reserved and defining a 1-bit signaling within the subfield to indicate SAP operation signaling information.

Specifically, defining a 1-bit signaling to indicate SAP operation signaling information by utilizing Reserved bits within the Common Info field.

### G. Multi-AP coordination type: Information on Multi-AP coordination transmission schemes such as C-OFDMA, C-TDMA, J-TX and C-SR

### H. Address: Address information of the DAP that is the target of TXOP sharing among the participating APs (e.g., BSS color, BSSID for Multi-AP, or the information A and B defined above)

### I. Operating channel: Information on the operating primary channel and punctured channel

-> For example, channel information commonly operating for smooth coordination among APs participating in C-TDMA
-> For example, primary channel information that APs participating in C-TDMA may commonly operate on.

Specifically, a new field serving the role of the CCSF0 field within the EHT Operation Information field may be defined to indicate the channel center frequency index for 20/40/80 MHz channels.

Specifically, a new field serving the role of the CCSF0 field within the EHT Operation Information field may be defined to indicate the channel center frequency for the primary 80 MHz channel of a 160 MHz channel or the channel center frequency for the primary 160 MHz channel of a 320 MHz channel.

In addition, a new field serving the role of the CCSF1 field within the EHT Operation Information field may be defined to indicate the channel center frequency for a 160 MHz channel or the channel center frequency for a 320 MHz channel.
-> For example, punctured channel information of APs participating in C-TDMA.

Specifically, a new field serving the role of the Disabled Subchannel Bitmap field within the EHT Operation Information field may be defined to indicate punctured 20 MHz subchannels using a bitmap.
- bit value of 0 in the bitmap: Indicates that the corresponding 20 MHz subchannel is not punctured.
- bit value of 1 in the bitmap: Indicates that the corresponding 20 MHz subchannel is punctured.

-> The primary channel of the DAP may be included within the operating channel of the SAP.
-> The primary channel of the DAP may be included within the operating channel excluding the punctured channel of the SAP.

### J. Operating bandwidth: Information on the operating bandwidth and maximum bandwidth

-> For example, BW information commonly operating for smooth coordination among APs participating in C-TDMA.

Specifically, the operating channel and primary channel information described above may be utilized.
-> For example, maximum bandwidth information of APs participating in C-TDMA.

Specifically, a new field serving the role of the Channel Width field within the Control field of the EHT Operation Information field may be defined to indicate the channel width, which is the BSS BW information of each AP.
- Set to 0: Indicates 20 MHz bandwidth
- Set to 1: Indicates 40 MHz bandwidth
- Set to 2: Indicates 80 MHz bandwidth
- Set to 3: Indicates 160/80+80 MHz bandwidth
- Set to 4: Indicates 320/160+160 MHz bandwidth
- The remaining values from 5 to 7 may be reserved.

-> For example, BW field information within the SIG-A field
-> For example, UL BW field information included within the Common Info field of the MU-RTS TXS TF
-> The bandwidth of the DAP may be included within the entire bandwidth of the SAP.
-> For example, modifying/redefining the Medium Time field of the QoS Characteristics element to include a new sub-field and newly adding a field for indicating bandwidth.

Specifically, a new field serving the role of the Channel Width field within the Control field of the EHT Operation Information field may be defined to indicate the channel width, which is the BSS BW information of each AP.
- Set to 0: Indicates 20 MHz bandwidth
- Set to 1: Indicates 40 MHz bandwidth
- Set to 2: Indicates 80 MHz bandwidth
- Set to 3: Indicates 160/80+80 MHz bandwidth
- Set to 4: Indicates 320/160+160 MHz bandwidth
- The remaining values from 5 to 7 may be reserved.

### K. Scheduled TXOP Duration: A duration during which APs participating in C-TDMA operation coordinate with each other and perform individual FE and TXOP sharing, or a nominal TXOP duration scheduled by the SAP for C-TDMA operation

-> For example, indicated by defining a new field including the Scheduled TXOP Duration.

Specifically, newly defined as a Scheduled Duration field (tentative name) to indicate information required for C-TDMA operation and the Scheduled TXOP Duration value.
-> For example, indicated by defining a new element including the Scheduled TXOP Duration.

Specifically, newly defined as a C-TDMA Operation element (tentative name) to indicate information required for C-TDMA operation and the Scheduled TXOP Duration value.
-> For example, indicated by including the Scheduled TXOP Duration within a QoS Characteristic element that may be used to include negotiation information in a pre-negotiation process for C-TDMA operation or within an element that may be newly defined for negotiation in C-TDMA.
-> For example, indicated by including the Scheduled TXOP Duration within a UHR Operation element that may be used to include announcement information in an announcement process of each AP for C-TDMA operation or within an element that may be newly defined for announcement in C-TDMA.

### L. Expected TXOP sharing timing: A TXOP sharing timing expected or scheduled by the SAP

-> For example, indicated by defining a new field including the Expected TXOP sharing timing.

Specifically, newly defined as an Expected TXOP sharing timing field (tentative name) to indicate information required for C-TDMA operation and the Expected TXOP sharing timing value.
-> For example, indicated by defining a new element including the Expected TXOP sharing timing.

Specifically, newly defined as a C-TDMA Operation element (tentative name) to indicate information required for C-TDMA operation and the Expected sharing timing value.

### M. Coordination priority: Indicates the priority for the currently operating coordination transmission among Multi-AP coordination schemes, or indicates the priority or protection level for efficient operation of C-TDMA transmission

-> For example, utilizing EHT Reserved (7 bits) or Reserved (4 bits) of the Common Info field.

Specifically, utilizing 2 bits corresponding to EHT Reserved or Reserved to indicate the priority (or protection level) of the current C-TDMA operation.
- bit 0: Indicates that the coordination transmission has a priority (or protection level) of level 0. For example, this may mean that no separate protection is required for TXOP sharing and TXOP return in C-TDMA operation.
- bit 1: Indicates that the coordination transmission has a priority (or protection level) of level 1-1. For example, this may mean that separate protection is required for TXOP sharing in C-TDMA operation.
- bit 2: Indicates that the coordination transmission has a priority (or protection level) of level 1-2. For example, this may mean that separate protection is required for TXOP return in C-TDMA operation.
- bit 3: Indicates that the coordination transmission has a priority (or protection level) of level 2. For example, this may mean that protection is required for both TXOP sharing and TXOP return in C-TDMA operation.

Alternatively, a new element (e.g., UHR Operation element (tentative name), C-TDMA Operation element (tentative name) or Multi-AP Coordination element (tentative name)) may be defined to include the contents C through I described above that are required for Multi-AP coordination and C-TDMA operation. Therefore, the Action field described above as one example (e.g., Management frame) of the selection/notification frame defined in this section may be represented as an example shown in Table 1 below.

**[Table 1]**

| Order | Meaning |
|---|---|
| 1 | Category |
| 2 | UHR Action (or) Protected UHR Action (or) Public Action |
| 3 | Definition and utilization of new elements for individual new fields (or) Selection frames including the above C~I contents |

### 1.2. Multi-AP Selection Method and Embodiments for C-TDMA Transmission

Through the Multi-AP selection procedure in C-TDMA described in Section 1.1 above, the selected DAP and unselected AP(s) may determine whether they are scheduled to be shared a TXOP within the current TXOP duration (e.g., using Multi-AP group ID, AP ID or address information of each AP). Based on the information delivered from the SAP and whether TXOP sharing is performed, each DAP may perform SCA as in the following examples.

### 1.2.1. SCA Method and Embodiments of a Selected DAP Configured with a Basic NAV

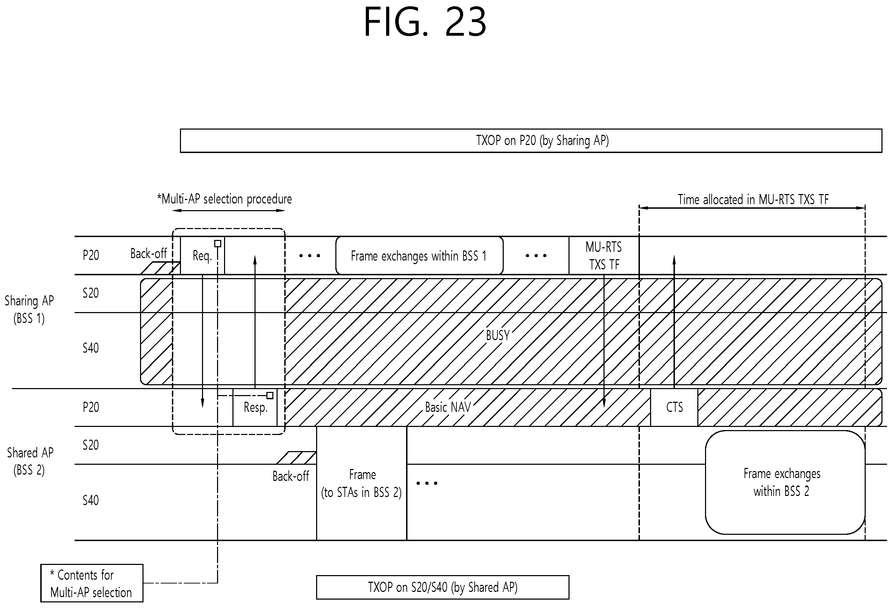

FIG. 23 illustrates an example of SCA performed by a selected DAP in a C-TDMA environment.

FIG. 23 illustrates an embodiment of SCA performed by a selected DAP that is scheduled to be shared a TXOP from the SAP in a C-TDMA environment. The SAP may transmit a selection request frame for the Multi-AP selection procedure immediately after acquiring a TXOP. Based on the address information of the DAP (e.g., BSSID) not being included in the Transmitter Address (TA) or Receiver Address (RA) field of the selection request frame at this time, the STAs of BSS 2 that receive it configure a basic NAV. The selected DAP (Shared AP in FIG. 23) may estimate from which point and for how long it may be shared a TXOP based on the information received from the SAP (e.g., Scheduled TXOP Duration and Expected TXOP sharing timing) through the Multi-AP selection procedure described in Section 1.1. Therefore, the selected DAP configured with a basic NAV may determine whether to perform SCA immediately after the Multi-AP selection procedure. In addition, SCA may be performed based on a secondary channel that does not overlap with the SAP, a secondary channel that is in a BUSY state for the SAP but in an IDLE state for the selected DAP, or a channel punctured to the SAP, by utilizing information from the SAP (e.g., Operating channel and Operating bandwidth). On the other hand, based on the response frame from the DAP being a CTS frame (or CTS-to-Self frame), the contents for Multi-AP selection presented in FIG. 23 may not be included. This is because the CTS frame (or CTS-to-Self frame) cannot include information.

The SCA method in a C-TDMA environment may be specifically performed as follows.

### <Frame Transmission Method on SCH>

The backoff procedure on the SCH based on P20 being busy is as follows.
- A STA may perform backoff on one or more SCHs based on P20 being busy.

Since neighboring STAs having the same or overlapping Operating channel as a specific STA currently attempting to perform SCA may also perform SCA, each STA performs backoff on the SCH as well. In this case, SCA may not be performed based on the NAV timer configured on the current PCH (P20) not being sufficient time to acquire a TXOP on the SCH and perform frame exchange.
- Based on the backoff counter reaching 0, the STA may perform a second type of CCA on SCHs other than the one or more SCHs on which backoff was performed. For example, CCA may be performed on SCHs other than the SCH on which backoff is being performed for a certain period of time (e.g., PIFS) before the backoff counter on the SCH reaches 0, and it may be determined whether the corresponding SCHs are in a BUSY state.
- Based on the CCA result, a STA performing SCA may transmit a frame using a channel including one or more IDLE SCH(s) and one or more SCH(s) on which backoff was performed.

### <TXOP Configuration Method on SCH>

Based on the Basic NAV on P20 expiring, CCA must be performed on P20, so the TXOP on the SCH is acquired such that it ends before the Basic NAV configured on P20 expires. In this case, SCA may not be performed based on the NAV timer configured on the current PCH (P20) not being sufficient time to acquire a TXOP on the SCH and perform frame exchange.

### 1.2.2. SCA Method and Embodiments of Unselected AP(s) Configured with a Basic NAV

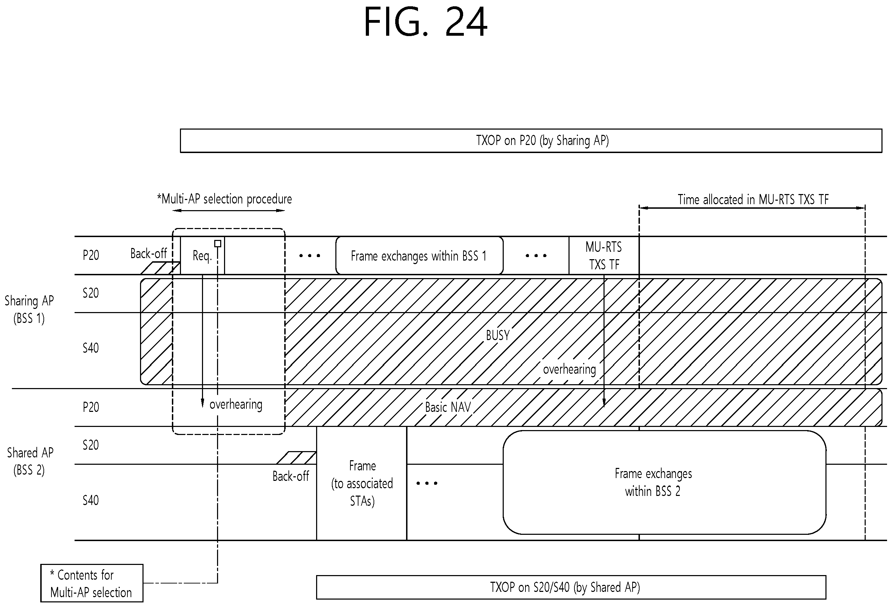

FIG. 24 illustrates an example of SCA performed by unselected AP(s) in a C-TDMA environment.

FIG. 24 illustrates an embodiment of SCA performed by unselected AP(s) that are not scheduled to be shared a TXOP from the SAP in a C-TDMA environment. The SAP may transmit a selection request frame for the Multi-AP selection procedure immediately after acquiring a TXOP. Based on the address information (e.g., BSSID) of themselves (e.g., unselected AP(s)) not being included in the TA or RA field of the selection request frame at this time, the unselected AP(s) that receive it and the STAs connected to them configure a basic NAV. The unselected AP(s) may overhear and obtain information delivered from the SAP (e.g., Scheduled TXOP Duration and Expected TXOP sharing timing) during the Multi-AP selection procedure described in Section 1.1, and may determine from which point and for how long the C-TDMA operation of the SAP will be maintained. Therefore, the unselected AP(s) configured with a basic NAV may determine whether to perform SCA immediately after the Multi-AP selection procedure. At this time, the unselected AP(s) may wait to receive additional frames that may be transmitted from the SAP (i.e., frames for Multi-AP selection or reselection) based on whether a reselection process may proceed in the Multi-AP selection procedure. Therefore, SCA may be performed based on a secondary channel that does not overlap with the SAP, a secondary channel that is in a BUSY state for the SAP but in an IDLE state for the unselected AP(s), or a channel punctured to the SAP, by utilizing information from the SAP (e.g., Operating channel and Operating bandwidth).

### 1.2.3. SCA Method and Embodiments of a Selected DAP Configured with an Intra-BSS NAV

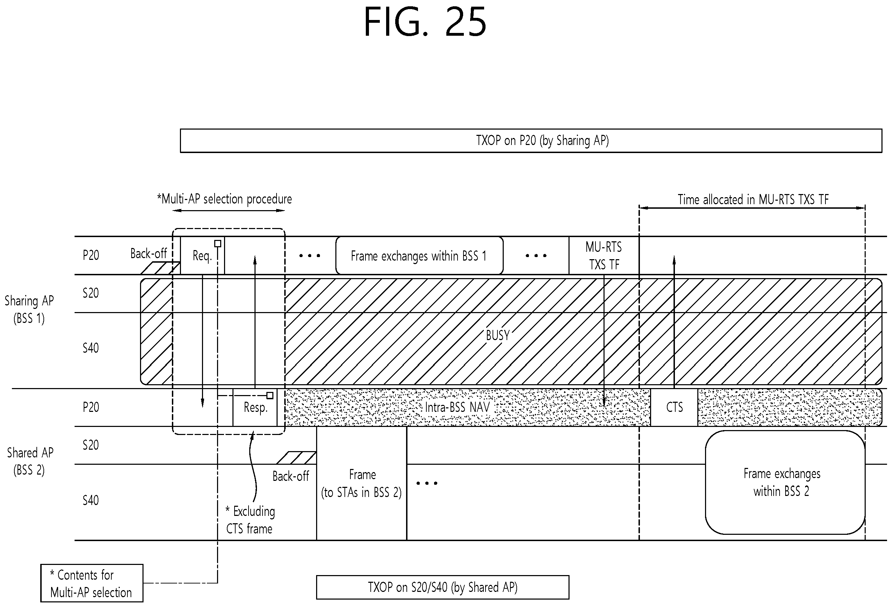

FIG. 25 illustrates an example of SCA performed by a selected DAP configured with an intra-BSS NAV in a C-TDMA environment.

FIG. 25 illustrates an embodiment in which a selected DAP configured with an intra-BSS NAV by a frame received from the SAP performs SCA in a C-TDMA environment. Based on the address (e.g., BSSID) of the DAP being included in the TA or RA field of the frame transmitted from the SAP, the DAP that receives it and the STAs connected to the DAP may configure an intra-BSS NAV. A STA (and selected DAP) that has configured an intra-BSS NAV may not perform SCA (i.e., whether a basic NAV is configured on the primary channel may serve as the main factor for performing SCA). Therefore, in order for the DAP and the STAs connected to the DAP to perform SCA before the scheduled TXOP sharing is performed, the response frame transmitted by the selected DAP in the Multi-AP selection procedure may be utilized. For example, a signaling bit indicating whether to perform SCA at short-term (i.e., TXOP-level or within a TXOP-level) intervals may be included in a response frame other than a CTS frame or CTS-to-Self frame. The following shows an example of a signaling bit indicating whether to perform SCA, and the terms (names) may be changed and are not limited thereto.
- Secondary Channel Access Mode: Indicates whether a STA having secondary channel access capability will perform SCA.

For example, the corresponding information may be delivered by utilizing the QoS Characteristic element included in the QoS data frame. For example, the corresponding information may be delivered by utilizing Reserved bits (3 bits) within the Control Info field of the QoS Characteristic element.

Specifically, a 1-bit signaling to indicate SCA mode information among the Reserved bits may be defined.
- bit 0: Indicates that the STA does not perform SCA
- bit 1: Indicates that the STA performs SCA

The selected DAP (Shared AP in FIG. 25) may estimate from which point and for how long it may be shared a TXOP based on the information received from the SAP (e.g., Scheduled TXOP Duration and Expected TXOP sharing timing) through the Multi-AP selection procedure described in Section 1.1. The selected DAP configured with an intra-BSS NAV may determine whether to perform SCA immediately after receiving a request frame from the SAP in the Multi-AP selection procedure. Subsequently, the selected DAP may transmit a response frame with the Secondary Channel Access Mode field set to 1 as presented above, and a rule may be added that the connected non-AP STAs may decode up to the corresponding field to obtain SCA operation related information based on receiving the response frame transmitted by the DAP. This decoding rule may be assumed to apply based on the TA field of the PPDU (e.g., including the response frame) received by the non-AP STAs being the BSSID of the AP connected to them or based on the BSS color of the corresponding PPDU matching their own BSS color. For example, STAs with SCA capability may decode the Secondary Channel Access Mode field of the response frame transmitted by the DAP and recognize that the DAP is scheduled to perform SCA. The non-AP STAs connected to the DAP may configure an intra-BSS NAV for a duration corresponding to the duration of the corresponding response frame and may perform SCA on the SCH until the NAV timer expires.

On the other hand, unselected AP(s) that may receive the selection request frame transmitted from the SAP and some non-AP STAs connected to them configure a basic NAV based on the BSSID information of the unselected AP(s) not being included in the TA and RA fields of the corresponding frame.

The present specification defines rules for enabling DAPs and coordinating APs that do not serve as a SAP to effectively perform SCA on the secondary channel in a C-TDMA environment. Specifically, Section 1.1 presents a Multi-AP selection procedure that may be utilized as a factor for determining whether to perform SCA, and Section 1.2 proposes SCA operation based on this. Through the proposed SCA in a C-TDMA environment, a DAP that is scheduled to be shared a TXOP from the SAP may perform FE using SCA until the TXOP sharing timing, and APs that are not shared a TXOP from the SAP may perform FE using SCA until the entire TXOP of the SAP ends.

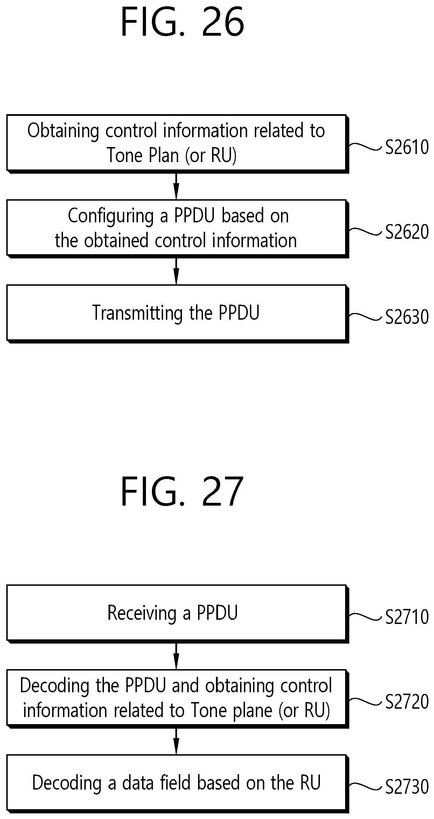

FIG. 26 is a procedural flowchart illustrating an operation of a transmitting apparatus according to the present embodiment.

The example of FIG. 26 may be performed by a transmitting device (AP and/or non-AP STA).

Some of each step (or detailed sub-step to be described later) of the example of FIG. 26 may be skipped/omitted.

Through step S2610, the transmitting device (transmitting STA) may obtain information about the above-described tone plan. As described above, the information about the tone plan includes the size and location of the RU, control information related to the RU, information about a frequency band including the RU, information about an STA receiving the RU, and the like.

Through step S2620, the transmitting device may construct/generate a PPDU based on the acquired control information. Configuring/generating the PPDU may include configuring/generating each field of the PPDU. That is, step S2620 includes configuring the EHT-SIG field including control information about the tone plan. That is, step S2620 includes configuring a field including control information (e.g., N bitmap) indicating the size/position of the RU; and/or configuring a field including an identifier of an STA receiving the RU (e.g., AID).

Also, step S2620 may include generating an STF/LTF sequence transmitted through a specific RU. The STF/LTF sequence may be generated based on a preset STF generation sequence/LTF generation sequence.

Also, step S2620 may include generating a data field (i.e., MPDU) transmitted through a specific RU.

The transmitting device may transmit the PPDU constructed through step S2620 to the receiving device based on step S2630.

While performing step S2630, the transmitting device may perform at least one of operations such as CSD, Spatial Mapping, IDFT/IFFT operation, and GI insertion.

A signal/field/sequence constructed according to the present specification may be transmitted in the form of FIG. 5.

FIG. 27 is a procedural flowchart illustrating an operation of a receiving apparatus according to the present embodiment.

The aforementioned PPDU may be received according to the example of FIG. 27.

The example of FIG. 27 may be performed by a receiving apparatus/device (AP and/or non-AP STA).

Some of each step (or detailed sub-step to be described later) of the example of FIG. 27 may be skipped/omitted.

The receiving device (receiving STA) may receive all or part of the PPDU through step S2710. The received signal may be in the form of FIG. 5.

A sub-step of step S2710 may be determined based on step S2630 of FIG. 26. That is, in step S2710, an operation of restoring the result of the CSD, Spatial Mapping, IDFT/IFFT operation, and GI insertion operation applied in step S2730 may be performed.

In step S2720, the receiving device may perform decoding on all/part of the PPDU. Also, the receiving device may obtain control information related to a tone plan (i.e., RU) from the decoded PPDU.

More specifically, the receiving device may decode the L-SIG and EHT-SIG of the PPDU based on the legacy STF/LTF and obtain information included in the L-SIG and EHT SIG fields. Information on various tone plans (i.e., RUs) described in this specification may be included in the EHT-SIG, and the receiving STA may obtain information on the tone plan (i.e., RU) through the EHT-SIG.

In step S2730, the receiving device may decode the remaining part of the PPDU based on information about the tone plan (i.e., RU) acquired through step S2720. For example, the receiving STA may decode the STF/LTF field of the PPDU based on information about one plan (i.e., RU). In addition, the receiving STA may decode the data field of the PPDU based on information about the tone plan (i.e., RU) and obtain the MPDU included in the data field.

In addition, the receiving device may perform a processing operation of transferring the data decoded through step S2730 to a higher layer (e.g., MAC layer). In addition, when generation of a signal is instructed from the upper layer to the PHY layer in response to data transmitted to the upper layer, a subsequent operation may be performed.

Hereinafter, the above-described embodiment will be described with reference to FIG. 1 to FIG. 27.

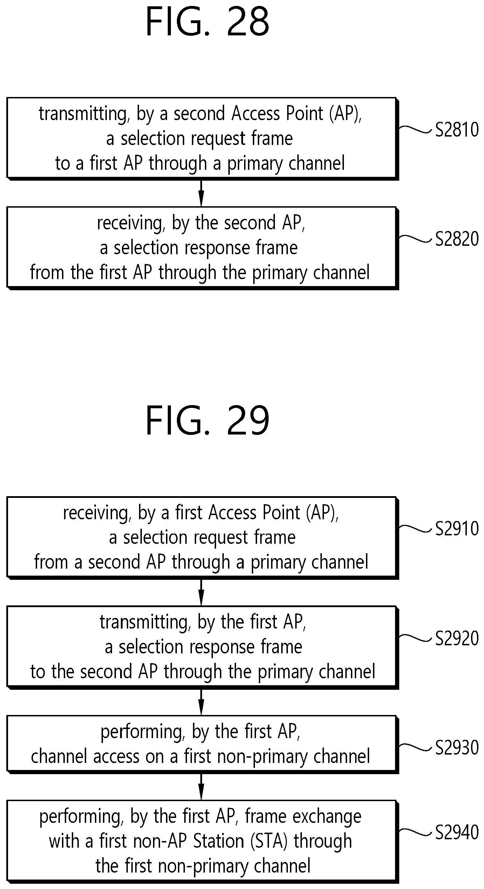

FIG. 28 is a flowchart illustrating a procedure of a method for performing Non-Primary Channel Access (NPCA) by selecting an AP that performs inter-AP coordination (e.g., C-SR, C-BF, C-OFDMA, etc.) from the perspective of a Sharing AP according to the present embodiment.

The example of FIG. 28 may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.11be system.

An example of FIG. 28 may be performed in a second AP, the second AP may be set as a sharing AP (SAP) after negotiation in multi-AP communication, and the first AP may be set as a shared AP (DAP) after negotiation in multi-AP communication. First and second non-AP STAs of the present embodiment may correspond to at least one station (STA).

The present embodiment proposes a method of performing coordination among a plurality of APs (e.g., C-TDMA, C-SR, C-BF, C-OFDMA, or J-TX) by selecting an AP to share a TXOP or to perform coordination between the APs. In particular, the present embodiment proposes a method in which a selected DAP and a non-selected AP in a procedure for selecting a Multi-AP perform channel access on a non-primary channel even when the primary channel is busy, and perform frame exchange with a non-AP STA within a BSS.

In step S2810, a second Access Point (AP) transmits a selection request frame to a first AP through a primary channel.

In step S2820, the second AP receives a selection response frame from the first AP through the primary channel.

At this time, the first AP performs channel access on a first non-primary channel. The first AP performs frame exchange with a first non-AP Station (STA) through the first non-primary channel.

Based on the selection request frame and the selection response frame, it is determined whether the first AP is selected as an AP to share a first Transmit Opportunity (TXOP) for coordination among a plurality of APs.

Based on whether address information of the first AP is included in a Transmitter Address (TA) field or a Receiver Address (RA) field of the selection request frame, the first non-AP STA sets a Network Allocation Vector (NAV) for the primary channel.

The first non-primary channel is a secondary 20MHz channel on which backoff may be performed while the NAV is set for the primary channel.

The first AP may receive a Multi User-Request to Send (MU-RTS) TXOP Sharing (TXS) trigger frame from the second AP. The first AP may transmit a Clear to Send (CTS) frame to the second AP.

The first TXOP may be shared based on the MU-RTS TXS trigger frame and the CTS frame.

In addition, a duration of the first TXOP may be configured based on the selection request frame. The selection request frame may include information on a TXOP duration scheduled by the second AP for the coordination among the plurality of APs and information on a timing at which the second AP expects or schedules to share a TXOP.

Based on the selection request frame and the selection response frame, based on the first AP being selected as an AP to share the first TXOP for the coordination among the plurality of APs, the second AP is a Sharing AP (SAP) that controls the coordination among the plurality of APs, and the first AP may be a Shared AP (DAP) that is allocated or shared resources from the Sharing AP (SAP).

The first non-AP STA may be a non-AP STA within a Basic Service Set (BSS) of the first AP.

The frame exchange through the first non-primary channel may be performed until the first TXOP starts. For example, the channel access and the frame exchange on the first non-primary channel may be performed only before the duration of the first TXOP starts.

The second AP may perform frame exchange with a second non-AP STA through the primary channel. The second non-AP STA may be a non-AP STA within a BSS of the second AP. The primary channel may be a primary 20MHz channel.

Based on the address information of the first AP not being included in the TA field or the RA field of the selection request frame, the NAV may be set as a basic NAV.

Based on the address information of the first AP being included in the TA field or the RA field of the selection request frame, the NAV may be set as an intra-BSS NAV.

Based on the NAV being set as the intra-BSS NAV, the selection response frame may include information on a Non-Primary Channel Access (NPCA) mode, which is information on whether to perform the channel access on the first non-primary channel.

Based on the TA field of the selection response frame being a Basic Service Set Identifier (BSSID) of the first AP or a BSS color of the selection response frame being identical to a BSS color of the first AP, the information on the NPCA mode may be decoded by the first non-AP STA.

Based on the NPCA mode being set to 0, the first AP and the first non-AP STA may not perform the channel access on the first non-primary channel.

Based on the NPCA mode being set to 1, the first AP and the first non-AP STA may perform the channel access on the first non-primary channel. In this case, the channel access on the first non-primary channel may be performed until a NAV timer of the intra-BSS NAV expires.

The first AP may perform the backoff on the first non-primary channel. Based on the backoff value for the first non-primary channel being 0, the first AP may perform channel access on a second non-primary channel. The first AP may perform the frame exchange with the first non-AP STA through an idle channel among the first and second non-primary channels. In this case, the second non-primary channel may be a secondary channel other than the first non-primary channel within a BSS operating channel of the first AP or a channel punctured to the second AP.

Based on the selection request frame and the selection response frame, based on the first AP not being selected as an AP to share the first TXOP for the coordination among the plurality of APs (for example, the first TXOP may not be shared with the first AP), the first AP may overhear the selection request frame and the MU-RTS TXS trigger frame. In this case, the frame exchange through the first non-primary channel may be performed until an entire TXOP of the second AP ends.

For example, the present embodiment proposes a method in which a selected DAP and a non-selected AP for coordination among a plurality of APs in a procedure for selecting a Multi-AP perform channel access on a non-primary channel. In this case, the selected DAP that is shared a TXOP may perform channel access on the non-primary channel and perform frame exchange until the TXOP sharing starts. The non-selected AP that is not shared the TXOP may perform channel access on the non-primary channel and perform frame exchange until the entire TXOP of the SAP ends.

As in the conventional approach, the mechanism based on the primary channel has the advantage that frame exchange between APs and non-AP STAs is protected without interference, but has the disadvantage of wasting the medium in that the non-primary channel (or secondary channel) in an IDLE state cannot be used based on the primary channel being in a BUSY state. Therefore, the present embodiment has an effect that, based on the non-primary channel being IDLE even though the primary channel of the SAP is BUSY, a selected DAP and a non-selected AP for coordination among a plurality of APs perform channel access and frame exchange on the non-primary channel, thereby increasing the utilization of the medium in coordination among a plurality of APs.

The TXOP duration scheduled by the second AP for the coordination among the plurality of APs may be a nominal TXOP duration scheduled by the second AP for the coordination among the plurality of APs.

In addition, the selection request frame may further include at least one of an identifier of a group for the coordination among the plurality of APs, an identifier of the Shared AP, information on a capability to operate as the Sharing AP, information indicating that the Sharing AP shares the first TXOP with the Shared AP, information on a scheme of the coordination among the plurality of APs, address information of the Shared AP, channel information on which the plurality of APs operate and bandwidth information on which the plurality of APs operate.

The selection response frame may include at least one of an identifier of a group for the coordination among the plurality of APs, an identifier of the Shared AP, address information of the Shared AP, channel information on which the plurality of APs operate, bandwidth information on which the plurality of APs operate, information on a TXOP duration that the Shared AP wishes to be shared, buffer status information of the Shared AP, information on whether TXOP sharing by the Sharing AP is required, information on low-latency traffic transmitted and received by each of the plurality of APs and a status code.

The scheme for the coordination among the plurality of APs may include coordinated Multi-AP schemes such as Coordinated-Time Division Multiplexing Access (C-TDMA), Coordinated-Spatial Reuse (C-SR), Coordinated-beamforming (C-BF) or Coordinated-Orthogonal Frequency Division Multiple Access (C-OFDMA).

FIG. 29 is a flowchart illustrating a procedure of a method for performing Non-Primary Channel Access (NPCA) by selecting an AP that shares a TXOP or performs inter-AP coordination (e.g., C-SR, C-BF, C-OFDMA, etc.) from the perspective of a Shared AP according to the present embodiment.

The example of FIG. 29 may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.11be system.

An example of FIG. 29 may be performed in a first AP, the first AP may be set as a shared AP (DAP) after negotiation in multi-AP communication, and the second AP may be set as a sharing AP (SAP) after negotiation in the multi-AP communication. First and second non-AP STAs of the present embodiment may correspond to at least one station (STA).

The present embodiment proposes a method of performing coordination among a plurality of APs (e.g., C-TDMA, C-SR, C-BF, C-OFDMA, or J-TX) by selecting an AP to share a TXOP or to perform coordination between the APs. In particular, the present embodiment proposes a method in which a selected DAP and a non-selected AP in a procedure for selecting a Multi-AP perform channel access on a non-primary channel even when the primary channel is busy, and perform frame exchange with a non-AP STA within a BSS.

In step S2910, a first Access Point (AP) receives a selection request frame from a second AP through a primary channel.

In step S2920, the first AP transmits a selection response frame to the second AP through the primary channel.

In step S2930, the first AP performs channel access on a first non-primary channel.

In step S2940, the first AP performs frame exchange with a first non-AP Station (STA) through the first non-primary channel.

Based on the selection request frame and the selection response frame, it is determined whether the first AP is selected as an AP to share a first Transmit Opportunity (TXOP) for coordination among a plurality of APs.

Based on whether address information of the first AP is included in a Transmitter Address (TA) field or a Receiver Address (RA) field of the selection request frame, the first non-AP STA sets a Network Allocation Vector (NAV) for the primary channel.

The first non-primary channel is a secondary 20MHz channel on which backoff may be performed while the NAV is set for the primary channel.

The first AP may receive a Multi User-Request to Send (MU-RTS) TXOP Sharing (TXS) trigger frame from the second AP. The first AP may transmit a Clear to Send (CTS) frame to the second AP.

The first TXOP may be shared based on the MU-RTS TXS trigger frame and the CTS frame.

In addition, a duration of the first TXOP may be configured based on the selection request frame. The selection request frame may include information on a TXOP duration scheduled by the second AP for the coordination among the plurality of APs and information on a timing at which the second AP expects or schedules to share a TXOP.

Based on the selection request frame and the selection response frame, based on the first AP being selected as an AP to share the first TXOP for the coordination among the plurality of APs, the second AP is a Sharing AP (SAP) that controls the coordination among the plurality of APs, and the first AP may be a Shared AP (DAP) that is allocated or shared resources from the Sharing AP (SAP).

The first non-AP STA may be a non-AP STA within a Basic Service Set (BSS) of the first AP.

The frame exchange through the first non-primary channel may be performed until the first TXOP starts. For example, the channel access and the frame exchange on the first non-primary channel may be performed only before the duration of the first TXOP starts.

The second AP may perform frame exchange with a second non-AP STA through the primary channel. The second non-AP STA may be a non-AP STA within a BSS of the second AP. The primary channel may be a primary 20MHz channel.

Based on the address information of the first AP not being included in the TA field or the RA field of the selection request frame, the NAV may be set as a basic NAV.

Based on the address information of the first AP being included in the TA field or the RA field of the selection request frame, the NAV may be set as an intra-BSS NAV.

Based on the NAV being set as the intra-BSS NAV, the selection response frame may include information on a Non-Primary Channel Access (NPCA) mode, which is information on whether to perform the channel access on the first non-primary channel.

Based on the TA field of the selection response frame being a Basic Service Set Identifier (BSSID) of the first AP or a BSS color of the selection response frame being identical to a BSS color of the first AP, the information on the NPCA mode may be decoded by the first non-AP STA.

Based on the NPCA mode being set to 0, the first AP and the first non-AP STA may not perform the channel access on the first non-primary channel.

Based on the NPCA mode being set to 1, the first AP and the first non-AP STA may perform the channel access on the first non-primary channel. In this case, the channel access on the first non-primary channel may be performed until a NAV timer of the intra-BSS NAV expires.

The first AP may perform the backoff on the first non-primary channel. Based on the backoff value for the first non-primary channel being 0, the first AP may perform channel access on a second non-primary channel. The first AP may perform the frame exchange with the first non-AP STA through an idle channel among the first and second non-primary channels. In this case, the second non-primary channel may be a secondary channel other than the first non-primary channel within a BSS operating channel of the first AP or a channel punctured to the second AP.

Based on the selection request frame and the selection response frame, based on the first AP not being selected as an AP to share the first TXOP for the coordination among the plurality of APs (for example, the first TXOP may not be shared with the first AP), the first AP may overhear the selection request frame and the MU-RTS TXS trigger frame. In this case, the frame exchange through the first non-primary channel may be performed until an entire TXOP of the second AP ends.

For example, the present embodiment proposes a method in which a selected DAP and a non-selected AP for coordination among a plurality of APs in a procedure for selecting a Multi-AP perform channel access on a non-primary channel. In this case, the selected DAP that is shared a TXOP may perform channel access on the non-primary channel and perform frame exchange until the TXOP sharing starts. The non-selected AP that is not shared the TXOP may perform channel access on the non-primary channel and perform frame exchange until the entire TXOP of the SAP ends.

As in the conventional approach, the mechanism based on the primary channel has the advantage that frame exchange between APs and non-AP STAs is protected without interference, but has the disadvantage of wasting the medium in that the non-primary channel (or secondary channel) in an IDLE state cannot be used based on the primary channel being in a BUSY state. Therefore, the present embodiment has an effect that, based on the non-primary channel being IDLE even though the primary channel of the SAP is BUSY, a selected DAP and a non-selected AP for coordination among a plurality of APs perform channel access and frame exchange on the non-primary channel, thereby increasing the utilization of the medium in coordination among a plurality of APs.

The TXOP duration scheduled by the second AP for the coordination among the plurality of APs may be a nominal TXOP duration scheduled by the second AP for the coordination among the plurality of APs.

In addition, the selection request frame may further include at least one of an identifier of a group for the coordination among the plurality of APs, an identifier of the Shared AP, information on a capability to operate as the Sharing AP, information indicating that the Sharing AP shares the first TXOP with the Shared AP, information on a scheme of the coordination among the plurality of APs, address information of the Shared AP, channel information on which the plurality of APs operate and bandwidth information on which the plurality of APs operate.

The selection response frame may include at least one of an identifier of a group for the coordination among the plurality of APs, an identifier of the Shared AP, address information of the Shared AP, channel information on which the plurality of APs operate, bandwidth information on which the plurality of APs operate, information on a TXOP duration that the Shared AP wishes to be shared, buffer status information of the Shared AP, information on whether TXOP sharing by the Sharing AP is required, information on low-latency traffic transmitted and received by each of the plurality of APs and a status code.

The scheme for the coordination among the plurality of APs may include coordinated Multi-AP schemes such as Coordinated-Time Division Multiplexing Access (C-TDMA), Coordinated-Spatial Reuse (C-SR), Coordinated-beamforming (C-BF) or Coordinated-Orthogonal Frequency Division Multiple Access (C-OFDMA).

### < Device configuration>

The technical features of the present disclosure may be applied to various devices and methods. For example, the technical features of the present disclosure may be performed/supported through the device(s) of FIG. 1 and/or FIG. 13. For example, the technical features of the present disclosure may be applied to only part of FIG. 1 and/or FIG. 13. For example, the technical features of the present disclosure may be implemented based on the processing chip(s) 114 and 124 of FIG. 1, or implemented based on the processor(s) 111 and 121 and the memory(s) 112 and 122, or implemented based on the processor 610 and the memory 620 of FIG. 13. For example, the device according to the present disclosure receives a Multi User-Request to Send (MU-RTS) Transmit Opportunity (TXOP) sharing (TXS) trigger frame from a second access point (AP); transmits a first Clear to Send (CTS) frame to the second AP; receives a second CTS frame from the second AP; and transmits a TXOP return sequence to the second AP.

The technical features of the present disclosure may be implemented based on a computer readable medium (CRM). For example, a CRM according to the present disclosure is at least one computer readable medium including instructions designed to be executed by at least one processor.

The CRM may store instructions that perform operations including receiving a Multi User-Request to Send (MU-RTS) Transmit Opportunity (TXOP) sharing (TXS) trigger frame from a second access point (AP); transmitting a first Clear to Send (CTS) frame to the second AP; receiving a second CTS frame from the second AP; and transmitting a TXOP return sequence to the second AP. At least one processor may execute the instructions stored in the CRM according to the present disclosure. At least one processor related to the CRM of the present disclosure may be the processor 111, 121 of FIG. 1, the processing chip 114, 124 of FIG. 1, or the processor 610 of FIG. 13. Meanwhile, the CRM of the present disclosure may be the memory 112, 122 of FIG. 1, the memory 620 of FIG. 13, or a separate external memory/storage medium/disk.

The foregoing technical features of the present specification are applicable to various applications or business models. For example, the foregoing technical features may be applied for wireless communication of a device supporting artificial intelligence (AI).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of connection between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse connection and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot joint. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR technology is a computer graphic technology of providing virtual objects mixed and combined with the real world.

MR technology is similar to AR technology in that a real object and a virtual object are displayed together. However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

The claims recited in the present specification may be combined in a variety of ways. For example, the technical features of the method claims of the present specification may be combined to be implemented as a device, and the technical features of the device claims of the present specification may be combined to be implemented by a method. In addition, the technical characteristics of the method claim of the present specification and the technical characteristics of the device claim may be combined to be implemented as a device, and the technical characteristics of the method claim of the present specification and the technical characteristics of the device claim may be combined to be implemented by a method.

## Claims

1. A method in a wireless LAN system, comprising:
receiving, by a first Access Point (AP), a selection request frame from a second AP through a primary channel;
transmitting, by the first AP, a selection response frame to the second AP through the primary channel;
performing, by the first AP, channel access on a first non-primary channel; and
performing, by the first AP, frame exchange with a first non-AP Station (STA) through the first non-primary channel,
wherein based on the selection request frame and the selection response frame, it is determined whether the first AP is selected as an AP to share a first Transmit Opportunity (TXOP) for coordination among a plurality of APs,
wherein based on whether address information of the first AP is included in a Transmitter Address (TA) field or a Receiver Address (RA) field of the selection request frame, the first non-AP STA sets a Network Allocation Vector (NAV) for the primary channel, and
wherein the first non-primary channel is a secondary 20MHz channel on which backoff may be performed while the NAV is set for the primary channel.

2. The method of claim 1, further comprising:
receiving, by the first AP, a Multi User-Request to Send (MU-RTS) TXOP Sharing (TXS) trigger frame from the second AP; and
transmitting, by the first AP, a Clear to Send (CTS) frame to the second AP,
wherein the first TXOP is shared based on the MU-RTS TXS trigger frame and the CTS frame,
wherein a duration of the first TXOP is configured based on the selection request frame, and
wherein the selection request frame includes information on a TXOP duration scheduled by the second AP for the coordination among the plurality of APs and information on a timing at which the second AP expects or schedules to share a TXOP.

3. The method of claim 2, wherein based on the selection request frame and the selection response frame, based on the first AP being selected as an AP to share the first TXOP for the coordination among the plurality of APs,
the second AP is a Sharing AP that controls the coordination among the plurality of APs,
the first AP is a Shared AP that is allocated or shared resources from the Sharing AP,
the first non-AP STA is a non-AP STA within a Basic Service Set (BSS) of the first AP, and
the frame exchange through the first non-primary channel is performed until the first TXOP starts.

4. The method of claim 3, wherein based on the address information of the first AP not being included in the TA field or the RA field of the selection request frame, the NAV is set as a basic NAV, and
wherein based on the address information of the first AP being included in the TA field or the RA field of the selection request frame, the NAV is set as an intra-BSS NAV.

5. The method of claim 4, wherein based on the NAV being set as the intra-BSS NAV, the selection response frame includes information on a Non-Primary Channel Access (NPCA) mode, which is information on whether to perform the channel access on the first non-primary channel,
wherein based on the TA field of the selection response frame being a Basic Service Set Identifier (BSSID) of the first AP or a BSS color of the selection response frame being identical to a BSS color of the first AP, the information on the NPCA mode is decoded by the first non-AP STA,
wherein based on the NPCA mode being set to 0, the first AP and the first non-AP STA do not perform the channel access on the first non-primary channel,
wherein based on the NPCA mode being set to 1, the first AP and the first non-AP STA perform the channel access on the first non-primary channel, and
wherein the channel access on the first non-primary channel is performed until a NAV timer of the intra-BSS NAV expires.

6. The method of claim 1, further comprising:
performing, by the first AP, the backoff on the first non-primary channel;
performing, by the first AP, channel access on a second non-primary channel based on the backoff value for the first non-primary channel being 0; and
performing, by the first AP, the frame exchange with the first non-AP STA through an idle channel among the first and second non-primary channels,
wherein the second non-primary channel is a secondary channel other than the first non-primary channel within a BSS operating channel of the first AP or a channel punctured to the second AP.

7. The method of claim 2, wherein based on the selection request frame and the selection response frame, based on the first AP not being selected as an AP to share the first TXOP for coordination among the plurality of APs, further comprising:
overhearing, by the first AP, the selection request frame and the MU-RTS TXS trigger frame,
wherein the first TXOP is not shared with the first AP, and
wherein the frame exchange through the first non-primary channel is performed until an entire TXOP of the second AP ends.

8. The method of claim 3, wherein the selection request frame further includes at least one of an identifier of a group for the coordination among the plurality of APs, an identifier of the Shared AP, information on a capability to operate as the Sharing AP, information indicating that the Sharing AP shares the first TXOP with the Shared AP, information on a scheme of the coordination among the plurality of APs, address information of the Shared AP, channel information on which the plurality of APs operate and bandwidth information on which the plurality of APs operate, and
wherein the selection response frame includes at least one of an identifier of a group for the coordination among the plurality of APs, an identifier of the Shared AP, address information of the Shared AP, channel information on which the plurality of APs operate, bandwidth information on which the plurality of APs operate, information on a TXOP duration that the Shared AP wishes to be shared, buffer status information of the Shared AP, information on whether TXOP sharing by the Sharing AP is required, information on low-latency traffic transmitted and received by each of the plurality of APs and a status code.

9. A first Access Point (AP) in a wireless LAN system, comprising:
a memory;
a transceiver; and
a processor operably coupled to the memory and the transceiver,
wherein the processor is configured to:
receive a selection request frame from a second AP through a primary channel;
transmit a selection response frame to the second AP through the primary channel;
perform channel access on a first non-primary channel; and
perform frame exchange with a first non-AP Station (STA) through the first non-primary channel,
wherein based on the selection request frame and the selection response frame, it is determined whether the first AP is selected as an AP to share a first Transmit Opportunity (TXOP) for coordination among a plurality of APs,
wherein based on whether address information of the first AP is included in a Transmitter Address (TA) field or a Receiver Address (RA) field of the selection request frame, the first non-AP STA sets a Network Allocation Vector (NAV) for the primary channel, and
wherein the first non-primary channel is a secondary 20MHz channel on which backoff may be performed while the NAV is set for the primary channel.

10. A method in a wireless LAN system, comprising:
transmitting, by a second Access Point (AP), a selection request frame to a first AP through a primary channel; and
receiving, by the second AP, a selection response frame from the first AP through the primary channel,
wherein channel access on a first non-primary channel is performed by the first AP,
wherein frame exchange between the first AP and a first non-AP Station (STA) is performed through the first non-primary channel,
wherein based on the selection request frame and the selection response frame, it is determined whether the first AP is selected as an AP to share a first Transmit Opportunity (TXOP) for coordination among a plurality of APs,
wherein based on whether address information of the first AP is included in a Transmitter Address (TA) field or a Receiver Address (RA) field of the selection request frame, the first non-AP STA sets a Network Allocation Vector (NAV) for the primary channel, and
wherein the first non-primary channel is a secondary 20MHz channel on which backoff may be performed while the NAV is set for the primary channel.

11. The method of claim 10, further comprising:
transmitting, by the second AP, a Multi User-Request to Send (MU-RTS) TXOP Sharing (TXS) trigger frame to the first AP; and
receiving, by the second AP, a Clear to Send (CTS) frame from the first AP,
wherein the first TXOP is shared based on the MU-RTS TXS trigger frame and the CTS frame,
wherein a duration of the first TXOP is configured based on the selection request frame, and
wherein the selection request frame includes information on a TXOP duration scheduled by the second AP for the coordination among the plurality of APs and information on a timing at which the second AP expects or schedules to share a TXOP.

12. The method of claim 11, wherein based on the selection request frame and the selection response frame, based on the first AP being selected as an AP to share the first TXOP for the coordination among the plurality of APs,
the second AP is a Sharing AP that controls the coordination among the plurality of APs,
the first AP is a Shared AP that is allocated or shared resources from the Sharing AP,
the first non-AP STA is a non-AP STA within a Basic Service Set (BSS) of the first AP, and
the frame exchange through the first non-primary channel is performed until the first TXOP starts.

13. The method of claim 12, wherein based on the address information of the first AP not being included in the TA field or the RA field of the selection request frame, the NAV is set as a basic NAV, and
wherein based on address the information of the first AP being included in the TA field or the RA field of the selection request frame, the NAV is set as an intra-BSS NAV.

14. The method of claim 13, wherein based on the NAV being set as the intra-BSS NAV, the selection response frame includes information on a Non-Primary Channel Access (NPCA) mode, which is information on whether to perform the channel access on the first non-primary channel,
wherein based on the TA field of the selection response frame being a Basic Service Set Identifier (BSSID) of the first AP or a BSS color of the selection response frame being identical to a BSS color of the first AP, the information on the NPCA mode is decoded by the first non-AP STA,
wherein based on the NPCA mode being set to 0, the first AP and the first non-AP STA do not perform the channel access on the first non-primary channel,
wherein based on the NPCA mode being set to 1, the first AP and the first non-AP STA perform the channel access on the first non-primary channel, and
wherein the channel access on the first non-primary channel is performed until a NAV timer of the intra-BSS NAV expires.

15. The method of claim 12, wherein the selection request frame further includes at least one of an identifier of a group for the coordination among the plurality of APs, an identifier of the Shared AP, information on a capability to operate as the Sharing AP, information indicating that the Sharing AP shares the first TXOP with the Shared AP, information on a scheme of the coordination among the plurality of APs, address information of the Shared AP, channel information on which the plurality of APs operate and bandwidth information on which the plurality of APs operate, and
wherein the selection response frame includes at least one of an identifier of a group for the coordination among the plurality of APs, an identifier of the Shared AP, address information of the Shared AP, channel information on which the plurality of APs operate, bandwidth information on which the plurality of APs operate, information on a TXOP duration that the Shared AP wishes to be shared, buffer status information of the Shared AP, information on whether TXOP sharing by the Sharing AP is required, information on low-latency traffic transmitted and received by each of the plurality of APs and a status code.

16. A second Access Point (AP) in a wireless LAN system, comprising:
a memory;
a transceiver; and
a processor operably coupled to the memory and the transceiver,
wherein the processor is configured to:
transmit a selection request frame to a first AP through a primary channel; and
receive a selection response frame from the first AP through the primary channel,
wherein channel access on a first non-primary channel is performed by the first AP,
wherein frame exchange between the first AP and a first non-AP Station (STA) is performed through the first non-primary channel,
wherein based on the selection request frame and the selection response frame, it is determined whether the first AP is selected as an AP to share a first Transmit Opportunity (TXOP) for coordination among a plurality of APs,
wherein based on whether address information of the first AP is included in a Transmitter Address (TA) field or a Receiver Address (RA) field of the selection request frame, the first non-AP STA sets a Network Allocation Vector (NAV) for the primary channel, and
wherein the first non-primary channel is a secondary 20MHz channel on which backoff may be performed while the NAV is set for the primary channel.

17. A computer readable medium including an instruction being executed by at least one processor and performing a method comprising the steps of:
receiving a selection request frame from a second Access Point (AP) through a primary channel;
transmitting a selection response frame to the second AP through the primary channel;
performing channel access on a first non-primary channel; and
performing frame exchange with a first non-AP Station (STA) through the first non-primary channel,
wherein based on the selection request frame and the selection response frame, it is determined whether a first AP is selected as an AP to share a first Transmit Opportunity (TXOP) for coordination among a plurality of APs,
wherein based on whether address information of the first AP is included in a Transmitter Address (TA) field or a Receiver Address (RA) field of the selection request frame, the first non-AP STA sets a Network Allocation Vector (NAV) for the primary channel, and
wherein the first non-primary channel is a secondary 20MHz channel on which backoff may be performed while the NAV is set for the primary channel.

18. An apparatus in a wireless LAN system, comprising:
a memory; and
a processor operably coupled to the memory,
wherein the processor is configured to:
receive a selection request frame from a second Access Point (AP) through a primary channel;
transmit a selection response frame to the second AP through the primary channel;
perform channel access on a first non-primary channel; and
perform frame exchange with a first non-AP Station (STA) through the first non-primary channel,
wherein based on the selection request frame and the selection response frame, it is determined whether a first AP is selected as an AP to share a first Transmit Opportunity (TXOP) for coordination among a plurality of APs,
wherein based on whether address information of the first AP is included in a Transmitter Address (TA) field or a Receiver Address (RA) field of the selection request frame, the first non-AP STA sets a Network Allocation Vector (NAV) for the primary channel, and
wherein the first non-primary channel is a secondary 20MHz channel on which backoff may be performed while the NAV is set for the primary channel.
